# FASCICULE DE BREVET EUROPEEN

(11) **EP 3 230 496 B1**
(45) Date de publication et mention de la délivrance du brevet: **24.07.2019**
(21) Numéro de dépôt: 15866977.0
(22) Date de dépôt: 02.12.2015
(51) Int. Cl.: C25C 3/22, B01D 53/10, B01D 53/50, B01D 53/68, B01D 53/75

(54) **USINE D'ÉLECTROLYSE ET PROCÉDÉ DE TRAITEMENT DES GAZ DE CUVE**
ELEKTROLYSEANLAGE UND VERFAHREN ZUR BEHANDLUNG VON ZELLGASEN
ELECTROLYSIS PLANT AND METHOD FOR TREATING CELL GASES

(30) Priorité: 08.12.2014 FR 1402805
(43) Date de publication de la demande: 18.10.2017
(73) Titulaire: Rio Tinto Alcan International Limited, Montréal, Québec H3B 0E3 (CA)
(72) Inventeur: GIRAULT, Guillaume, 13080 Aix-en-Provende (FR); PETIT, Stéphane, 38000 Grenoble (FR)
(74) Mandataire: Malcoiffe, Julien
(86) Numéro de dépôt international: PCT/IB2015/002283
(87) Numéro de publication internationale: WO 2016/092357

(56) Documents cités:
- WO-A1-96/15846
- WO-A1-96/15846
- WO-A2-2013/093268
- WO-A2-2013/093268
- US-A- 4 770 752

## Description

La présente invention concerne une usine d'électrolyse destinée à la production d'aluminium par électrolyse et un procédé de traitement des gaz de cuve générés lors de la réaction d'électrolyse au sein de cette usine d'électrolyse.

La production de l'aluminium par électrolyse permet de fabriquer du métal aluminium à partir d'alumine. La réaction d'électrolyse s'effectue classiquement dans une cuve d'électrolyse. Une usine d'électrolyse comprend traditionnellement une ou plusieurs séries de cuves d'électrolyse. Chaque série comprend plusieurs centaines de cuves d'électrolyse reliées électriquement en série les unes aux autres. Les cuves d'électrolyse comprennent un caisson, une cathode disposée au fond du caisson, un bain électrolytique dans lequel est dissoute l'alumine et une anode plongée à l'intérieur du bain électrolitique.

Suivant le principe de l'électrolyse, un courant électrique continu, appelé courant d'électrolyse, circule entre l'anode et la cathode et l'aluminium produit forme une nappe d'aluminium liquide.

Des gaz, appelés gaz de cuve, sont générés lors du processus d'électrolyse. Ces gaz contiennent notamment du fluorure d'hydrogène (HF), du dioxyde de soufre (SO₂), du dioxyde de carbone (CO₂) et des poussières ou particules solides incluant du fluor.

Les gaz de cuve sont habituellement captés dans des hottes d'aspiration positionnées dans la partie supérieure des cuves d'électrolyse. Ces hottes sont connectées entre elles par un réseau de gaines conduisant à un centre de traitement des gaz (CTG).

Des ventilateurs d'aspiration aspirent les gaz de cuve depuis ces hottes et les conduisent via le réseau de gaines jusqu'au centre de traitement des gaz. Ces ventilateurs permettent de maintenir l'ensemble des cuves d'électrolyse en dépression et de capter ainsi les gaz générés pendant la réaction d'électrolyse. Cette aspiration participe par ailleurs au refroidissement des éléments internes des cuves d'électrolyse.

Compte-tenu des défauts d'étanchéités des cuves d'électrolyse capotées traditionnelles, le débit d'aspiration des gaz de cuve est relativement élevé et les usines d'électrolyse traditionnelles comprennent un ou plusieurs centres de traitement des gaz par série de cuves d'électrolyse, afin de traiter des volumes de gaz importants.

Cependant, cela pose un problème de coûts et d'encombrement.

En outre, les centres de traitement de gaz des usines d'électrolyse existantes sont typiquement adaptés pour traiter seulement le fluorure d'hydrogène, sans traiter le dioxyde de soufre ou le dioxde de carbone également présents dans les gaz de cuve qui sont rejetés dans l'environnement.

Il existe des centres de traitement des gaz adaptés pour traiter le fluorure d'hydrogène et le dioxyde de soufre. Cela est connu par exemple du document de brevet WO96/15846 et du document de brevet WO2013/093268.

Dans le document de brevet WO96/15846, le centre de traitement des gaz comprend deux étages de traitement, un premier étage de traitement comprenant un unique réacteur destiné à traiter le fluorure d'hydrogène et un deuxième étage de traitement comprenant un unique réacteur destiné à traiter le dioxyde de soufre.

Cependant, dans le document WO96/15846, le réacteur formant le premier étage de traitement est insuffisant pour traiter des gaz de cuve contenant une forte concentration en fluorure d'hydrogène et dioxyde de soufre. En outre, ce réacteur est dimensionné pour traiter les gaz de cuve de toute une série de cuves d'électrolyse. Ce réacteur est donc encombrant. Cet encombrement oblige à éloigner ce réacteur des cuves d'électrolyse. Les gaz de cuve parcourent donc une distance importante, entre leur sortie des cuves d'électrolyse et ce réacteur, durant laquelle ces gaz de cuve perdent leur chaleur. L'alumine, qui s'est chargée en fluor dans le réacteur, est introduite dans les cuves d'électrolyse et parcourt à cet effet une distance importante depuis sa sortie du réacteur jusqu'à son introduction dans les cuves d'électrolyse. Le transport de l'alumine depuis le réacteur jusqu'aux cuves d'électrolyse prend donc un temps important, de l'ordre de quelques heures à plusieurs jours, incluant une phase de stockage intermédiaire dans un silo, et est réalisé au moyen de conduits balayés par de l'air à température ambiante au travers desquels est transporté l'alumine. Aussi, l'alumine est revenue à une température relativement basse, proche de l'ambiante avant introduction dans les cuves d'électrolyse malgré le transfert de chaleur réalisé dans le réacteur depuis les gaz de cuve vers l'alumine.

Le document de brevet WO2013/093268 divulgue plusieurs réacteurs destinés à traiter du fluorure d'hydrogène et du dioxyde de soufre contenus dans des gaz de cuve. Ces réacteurs sont agencés en série les uns par rapport aux autres. Cela permet de limiter les coûts et l'encombrement.

Cependant, cet agencement en série présente une limite dans la capacité de traitement de gaz de cuve contenant une forte concentration en fluorure d'hydrogène et dioxyde de soufre. De plus, l'agencement en série contraint à positionner ces réacteurs les uns à côté des autres ; ces réacteurs forment donc un ensemble indivisible, et de ce fait, sont nécessairement placés à une distance relativement éloignée des cuves d'électrolyse.

On notera également que certaines usines d'électrolyse de l'état de la technique comprennent des centres de traitement des gaz équipés d'un laveur humide destiné à traiter le dioxyde de soufre.

Toutefois, ces laveurs humides sont coûteux.

Ces inconvénients des usines d'électrolyse de l'état de la technique sont accentués par le fait que les cuves d'électrolyse tendent à présenter des caractéristiques de gaz de cuve émis qui diffèrent sensiblement de ce qui préexistait. En effet, les cuves d'électrolyse actuellement développées par la demanderesse tendent vers une amélioration de l'étanchéité globale des cuves d'électrolyse permettant une réduction significative des débits d'aspiration des gaz de cuve. Ces débits tendent à passer d'une valeur typiquement comprise entre 70 000 et 120 000 Nm³/tAl (Nm³ par tonne d'aluminium produite) pour les technologies de cuve existantes à une valeur comprise entre 15 000 et 50 000 Nm³/tAl.

Cette baisse sensible du débit d'aspiration entraîne une hausse sensible des concentrations en fluorure d'hydrogène et dioxyde de soufre à l'intérieur des cuves d'électrolyse. Ces concentrations passent ainsi pour le fluorure d'hydrogène d'environ [200-400] mg/Nm³ à environ [1000-2000] mg/Nm³.

La baisse sensible du débit d'aspiration est aussi accompagnée d'une hausse sensible de la température des gaz de cuve. La température des gaz de cuve tend à s'élever d'environ 130°C pour les cuves d'électrolyse préexistantes à plus de 200°C, 300°C voire 400°C pour les nouvelles générations de cuves d'électrolyse.

Ces hausses importantes en température et en concentrations en flurorure d'hydrogène et dioxyde de soufre affectent la performance des centres de traitement des gaz des usines d'électrolyse existantes et impliquent un besoin en performances améliorées.

En parallèle, les réglementations environnementales sont de plus en plus strictes, ce qui implique d'avoir des rendements plus élevés qu'aujourd'hui compte-tenu de l'augmentation prévue des concentrations en fluorure d'hydrogène, dioxyde de soufre et dioxyde de carbone dans les gaz de cuve.

Enfin, dans une optique économique de rendement et dans une optique de préservation des ressources environnementales, il est constant d'essayer de réduire la consommation d'énergie globale des usines d'électrolyse, et notamment des cuves d'électrolyse et des centres de traitement des gaz.

Dans ce contexte, la présente invention vise à pallier les inconvénients susmentionnés en proposant une usine d'électrolyse offrant un traitement plus efficace des gaz de cuve, un encombrement moindre et un rendement énergétique amélioré, ainsi qu'un procédé de traitement des gaz de cuve permettant un traitement plus efficace des gaz de cuve et un rendement énergétique amélioré.

A cet effet, la présente invention a pour objet une usine d'électrolyse destinée à la production d'aluminium par électrolyse, l'usine d'électrolyse comprenant une série de cuves d'électrolyse et un circuit de traitement de gaz destiné à traiter des gaz de cuve générés par la série de cuves d'électrolyse au cours de la réaction d'électrolyse,
le circuit de traitement de gaz comprenant un premier étage de traitement configuré pour traiter du fluorure d'hydrogène présent dans les gaz de cuve, un deuxième étage de traitement configuré pour traiter du dioxyde de soufre présent dans les gaz de cuve et un circuit d'alimentation en alumine configuré pour alimenter en alumine le premier étage de traitement et le deuxième étage de traitement,
l'usine d'électrolyse étant caractérisée en ce que
l'usine d'électrolyse comprend un échangeur de chaleur placé entre le premier étage de traitement et le deuxième étage de traitement.

Autrement dit, l'échangeur thermique est placé à l'aval du premier étage de traitement et à l'amont du deuxième étage de traitement, amont et aval s'entendant par rapport au sens de circulation des gaz de cuve dans le circuit de traitement de gaz. Ainsi, les gaz de cuve sortant du premier étage de traitement sont refroidis avant d'être traités dans le deuxième étage de traitement.

Un avantage de l'utilisation d'un échangeur de chaleur avant le deuxième étage de traitement est que la température des gaz de cuve peut être abaissée à un niveau compatible avec l'adsorption du dioxyde de soufre sur l'alumine dans le deuxième étage de traitement, par exemple jusqu'à une température inférieure ou égale à 100°C, ou inférieure ou égale à 70°C, et donc d'améliorer le rendement de traitement du dioxyde de soufre.

Le volume de gaz à traiter dans le deuxième étage de traitement est par ailleurs minimisé, ainsi que le cout associé à ce traitement qui est très fortement lié au volume des gaz à traiter.

Les échangeurs thermiques associés aux gaz de cuve sont traditionnellement disposés en amont des centres de traitement des gaz destinés à traiter le fluorure d'hydrogène. Un tel positionnement traditionnel résulte de la volonté de profiter au maximum dans les échangeurs thermiques de la chaleur contenue dans les gaz de cuve, donc avant mise en contact de ces gaz avec de l'alumine, et du besoin d'abaisser la température des gaz de cuve pour pouvoir utiliser les systèmes de filtration traditionnels à filtres qui ne sont pas efficients lorsque la température des gaz est élevée.

La demanderesse a trouvé qu'au contraire, le positionnement d'un échangeur de chaleur après le premier étage de traitement et avant le second étage de traitement était particulièrement avantageux.

En effet, le passage de gaz ayant une température élevée, notamment supérieure à 150°C, dans le premier étage de traitement des gaz, assure une bonne sélectivité de l'adsorption du fluor sur l'alumine par rapport à l'adsorption du soufre sur l'alumine. Ainsi, le soufre n'est pas adsorbé sur l'alumine dans le premier étage de traitement des gaz et n'est pas renvoyé vers la cuve d'électrolyse avec l'alumine fluorée dans la première étape de traitement des gaz.

Aussi, un transfert thermique pour préchauffer de l'alumine dans le premier étage de traitement des gaz peut être d'autant plus efficace que la température des gaz est élevée et aboutir à une valorisation directe de l'énergie tirée de la chaleur des gaz, contrairement à l'énergie obtenue via un échangeur thermique, de sorte que la solution de la présente invention est particulièrement avantageuse. De plus, le cas échéant, lorsque le réacteur du premier étage de traitement est configuré pour séparer les gaz de cuve et les particules solides transportées par ces gaz de cuve, par exemple lorsque ce réacteur est un réacteur cyclonique, les poussières sont déjà enlevées du flux de gaz traversant l'échangeur thermique, de sorte que l'échangeur thermique ne s'encrasse pas comme c'est le cas avec son positionnement traditionnel.

En outre, la demanderesse a observé que l'abaissement de la température des gaz avant leur passage dans le deuxième étage de traitement des gaz, notamment en dessous de 100°C et de préférence en dessous de 70°C, permet de faciliter l'étape de désorption du soufre adsorbé sur l'alumine. En effet, un abaissement de la température de gaz contenant du soufre favorise l'adsorption par physisorption du dioxyde de soufre sur l'alumine au détriment de l'adsorption par chimisorption du dioxyde de soufre sur l'alumine. Or, la désorption du dioxyde de soufre physisorbé sur de l'alumine requiert moins d'énergie que la désorption du dioxyde de soufre chimisorbé sur de l'alumine. Un tel abaissement de la température, en sus de pouvoir être valorisé par l'énergie résultant de l'échange thermique, participe de façon avantageuse à un abaissement de l'énergie globale nécessaire au fonctionnement du centre de traitement des gaz et de l'usine d'électrolyse.

Aussi, l'abaissement de la température des gaz avant leur passage dans le deuxième étage de traitement des gaz permet de s'assurer que le flurorure d'hydrogène résiduel restant dans les gaz de cuve après traitement dans le premier étage de traitement est complètement adsorbé, l'adsorption du fluorure d'hydrogène étant elle-même plus efficace lorsque la température est abaissée.

En somme, il découle de ce qui précède que le fait de placer un échangeur thermique à l'aval du premier étage de traitement et à l'amont du deuxième étage de traitement améliore sensiblement le rendement énergétique de traitement des gaz de cuve et les performances de traitement des gaz de cuve, si bien que cette caractéristique rend l'usine d'électrolyse adapté au traitement de gaz de cuve présentant des concentrations fortes en fluorure d'hydrogène et en dioxyde de soufre.

Le circuit de traitement de gaz de l'usine d'électrolyse est ainsi particulièrement adapté aux cuves d'électrolyse de type récent, c'est-à-dire dans lesquelles la température des gaz de cuve atteint des valeurs élevées, (supérieures à 200°C, et plus particulièrement comprise entre 300-400°C au lieu de 100-150°C pour les cuves de générations plus anciennes), présentant un débit d'aspiration faible des gaz de cuve (comprise entre 15 000 et 50 000 Nm³/tAl au lieu de typiquement comprise entre 70 000 et 120 000 Nm³/tAl pour les cuves de générations plus anciennes), et/ou une concentration élevée en fluorure d'hydrogène, dioxyde de soufre et poussières à l'intérieur de ces cuves (pour le fluorure d'hydrogène égale ou supérieure à 1000-2000 mg/Nm³ au lieu de concentrations d'environ 200-400 mg/Nm³ pour les cuves de générations plus anciennes).

L'échangeur de chaleur est avantageusement adapté pour abaisser la température des gaz de cuve d'une température de 400°C en entrée de l'échangeur de chaleur à une température inférieure ou égale à 100°C et de préférence inférieure ou égale à 70°C en sortie de l'échangeur de chaleur.

Ainsi, l'usine d'électrolyse selon l'invention est performante pour traiter les gaz de cuve générés par les cuves d'électrolyse les plus récentes, dans lesquelles la température des gaz peut atteindre 200°C, et même 300°C voire 400°C.

Avantageusement, le deuxième étage de traitement comprend un réacteur configuré pour fixer par adsorption le dioxyde de soufre sur de l'alumine provenant de ce circuit d'alimentation en alumine.

On notera que le deuxième étage de traitement peut comprendre un réacteur configuré pour séparer l'alumine sulfurée, issue de l'adsorption du dioxyde de soufre sur l'alumine fraîche, des gaz de cuve débarrassés du dioxyde de soufre. A cette fin, le réacteur du deuxième étage de traitement peut comporter un filtre à manche.

Ainsi, en sortie du deuxième étage de traitement, les gaz de cuve sont épurés en dioxyde de soufre (et en fluorure d'hydrogène, grâce au premier étage de traitement précédant le deuxième étage de traitement).

Avantageusement, le premier étage de traitement peut comprendre un réacteur configuré pour fixer par adsorption le fluorure d'hydrogène sur de l'alumine provenant de ce circuit d'alimentation en alumine

Selon un mode de réalisation préféré, le premier étage de traitement comprend une pluralité de réacteurs, chaque réacteur étant associé à un groupe de cuves d'électrolyse, chaque groupe de cuves d'électrolyse comprenant une ou plusieurs cuves d'électrolyse de la série de cuves d'électrolyse, et chaque réacteur comprend :
- une première entrée reliée au groupe de cuves d'électrolyse associé, en vue de collecter les gaz de cuve générés par ledit groupe de cuves d'électrolyse,
- une deuxième entrée reliée au circuit d'alimentation en alumine pour alimenter chaque réacteur en alumine, en vue de fixer par adsorption du fluorure d'hydrogène présent dans les gaz de cuve sur ladite alumine, et
- une première sortie pour conduire les gaz de cuve traités dans le premier étage de traitement vers le deuxième étage de traitement.

Ainsi, l'usine d'électrolyse selon l'invention offre l'avantage de traiter le fluorure d'hydrogène dans une pluralité de réacteurs en parallèle, chaque réacteur étant affecté au traitement des gaz de cuve d'un groupe de cuves d'électrolyse.

Il en résulte un traitement plus efficace que dans l'état de la technique, ce qui permet de traiter des gaz de cuve présentant des concentrations élevées en fluorure d'hydrogène et dioxyde de soufre.

Il en résulte également une réduction de la taille de ces réacteurs, ce qui permet un gain de place significatif dans l'usine d'électrolyse. Cela permet aussi, dans le cas de cuves d'électrolyse de dernière génération, de positionner ces réacteurs à proximité de ces cuves d'électrolyse afin de tirer profit de la température élevée des gaz de cuve.

Selon un mode de réalisation préféré, chaque réacteur est configuré pour préchauffer de l'alumine destinée à alimenter le groupe de cuves d'électrolyse auquel ce réacteur est associé, par transfert thermique entre les gaz de cuve circulant dans ce réacteur et ladite alumine et chaque réacteur comprend une deuxième sortie pour alimenter le groupe de cuves d'électrolyse avec l'alumine préchauffée au sein du réacteur par les gaz de cuve.

Cette caractéristique a l'avantage de réduire sensiblement la consommation d'énergie des cuves d'électrolyse de chaque groupe de cuves d'électrolyse, car l'énergie apportée par ce préchauffage de l'alumine alimentant les cuves d'électrolyse n'est pas prélevée dans les cuves d'électrolyse elles-mêmes, contrairement à l'état de la technique, mais dans les gaz de cuve circulant dans le circuit de traitement des gaz de cuve. Pour des cuves d'électrolyse récentes, cela permet une réduction significative de la consommation d'énergie de la cuve d'électrolyse : environ 50-100 kWh/tAl.

Ce préchauffage permet aussi de « sécher » l'alumine, c'est-à-dire d'éliminer une partie de l'eau contenue dans l'alumine, ce qui permet de baisser les émissions de fluorure d'hydrogène à la cuve, l'eau contenue dans l'alumine étant une source importante des émissions de fluorure d'hydrogène au contact du bain d'électrolyse. On instaure ainsi un cycle vertueux.

Cette caractéristique est particulièrement avantageuse lorsque les cuves d'électrolyse sont des cuves d'électrolyse récentes pour lesquelles la température des gaz de cuve est particulièrement élevée (supérieure à 200°C et plus particulièrement de l'ordre de 300°C à 400°C). La température plus élevée des gaz de cuve dans les cuves d'électrolyse les plus récentes ouvre en effet la voie, dans une usine d'électrolyse selon l'invention, à une valorisation plus économique de l'importante énergie contenue dans ces fumées (de l'ordre d'environ 350kW/cuve pour les cuves d'électrolyse les plus récentes), alors que l'énergie des gaz de cuve est dissipée dans l'état de la technique.

Comme l'alumine est préchauffée au sein des réacteurs, cela permet de disposer de réacteurs compacts. De façon plus générale, il en résulte une usine d'électrolyse ayant un encombrement limité.

Selon un mode de réalisation préféré, chaque réacteur comprend une enceinte délimitant un volume dans lequel circulent à la fois les gaz de cuve provenant du groupe de cuves d'électrolyse associé et l'alumine destinée à alimenter ce groupe de cuves d'électrolyse, l'enceinte étant configurée pour permettre un transfert thermique par contact direct entre les gaz de cuve et l'alumine destinée à alimenter le groupe de cuves d'électrolyse associé.

Cela offre l'avantage de traiter le fluorure d'hydrogène contenu dans les gaz de cuve au moyen de l'alumine qui est destinée à alimenter les cuves d'électrolyse, en même temps que de réaliser le transfert thermique. Aussi, le fluor dégagé par ce groupe de cuves sous forme de fluorure d'hydrogène gazeux est renvoyé vers ce même groupe de cuves, sous forme d'alumine fluorée, ce qui permet de mieux contrôler la quantité de fluor présente dans le bain d'électrolyse.

L'alumine alimentant chaque groupe de cuves d'électrolyse est donc aussi l'alumine fluorée résultant de l'adsorption du fluorure d'hydrogène sur l'alumine au sein du réacteur associé à ce groupe de cuves d'électrolyse. Cela revient à dire que l'alumine utilisée pour le circuit de traitement de gaz est aussi l'alumine utilisée pour la réaction d'électrolyse.

L'alumine destinée à alimenter les cuves d'électrolyse transite préalablement par les réacteurs du premier étage de traitement : cette alumine entre par la deuxième entrée des réacteurs, adsorbe le fluor au sein des réacteurs, et sort des réacteurs via la deuxième sortie en direction des cuves d'électrolyse.

Il en résulte des coûts d'exploitation réduits, car l'usine d'électrolyse est ainsi plus économe en matières premières.

Il en résulte aussi une usine d'électrolyse compacte, car le circuit d'alimentation en alumine des cuves d'électrolyse est aussi celui des réacteurs du premier étage de traitement.

Selon un mode de réalisation préféré, chaque réacteur du premier étage de traitement est configuré pour séparer les gaz de cuve, les particules solides transportées par ces gaz de cuve, et l'alumine fluorée issue de l'adsorption du fluor sur l'alumine injectée dans le réacteur via la deuxième entrée.

Cette caractéristique est particulièrement avantageuse quand elle est utilisée en combinaison avec la caractéristique selon laquelle chaque réacteur est configuré pour préchauffer de l'alumine destinée à alimenter le groupe de cuves d'électrolyse auquel ce réacteur est associé, par transfert thermique, plus particulièrement par contact direct, entre les gaz de cuve circulant dans ce réacteur et cette alumine.

Cette caractéristique permet en effet de bénéficier de réacteurs assurant plusieurs fonctions, donc de bénéficier d'un équipement compact. Cela offre un gain de place significatif dans l'usine d'électrolyse selon l'invention.

Selon un mode de réalisation préféré, les réacteurs du premier étage de traitement sont des réacteurs cycloniques.

Cette caractéristique offre l'avantage de réacteurs compacts, pouvant donc être placés au plus près des cuves d'électrolyse et permettant de séparer les gaz de cuve, les particules solides transportées par ces gaz de cuve, et l'alumine fluorée issue de l'adsorption du fluor sur l'alumine injectée dans le réacteur via la deuxième entrée.

Selon un mode de réalisation préféré, chaque réacteur est agencé à moins de 40 mètres, notamment à moins de 20 mètres, et de préférence à moins de 10 mètres, de chaque cuve d'électrolyse du groupe de cuves d'électrolyse auquel ce réacteur est associé.

Cela permet de diminuer les pertes thermiques : plus le réacteur à l'intérieur duquel s'opère le transfert thermique est proche des cuves d'électrolyse auquel ce réacteur est associé, moins les gaz de cuve et l'alumine préchauffée ont le temps de refroidir, et donc plus le rendement de l'échange thermique est élevé.

Selon un mode de réalisation préféré, chaque groupe de cuves d'électrolyse comprend au maximum quatre, de préférence au maximum trois, cuves d'électrolyse de la série de cuves d'électrolyse.

Un avantage de cette caractéristique est un compromis optimisé entre un nombre minimal de réacteurs afin de réduire les coûts, et un traitement efficace et un emplacement proche des cuves d'électrolyse de chaque réacteur pour réduire la consommation des cuves d'électrolyse.

Selon un mode de réalisation préféré, chaque groupe de cuves d'électrolyse comprend plusieurs cuves d'électrolyse et les cuves d'électrolyse de chaque groupe de cuves d'électrolyse sont des cuves d'électrolyse adjacentes de la série de cuves d'électrolyse.

Cette caractéristique assure un emplacement de chaque réacteur au plus proche des cuves d'électrolyse auxquelles ce réacteur est associé, ce qui permet de conserver et tirer le plus possible profit de la chaleur des gaz de cuve circulant dans ce réacteur afin de préchauffer l'alumine destinée à alimenter ces cuves d'électrolyse.

Selon un mode de réalisation préféré, chaque groupe de cuves d'électrolyse comprend une unique cuve d'électrolyse.

Un avantage de l'individualisation de l'association cuve d'électrolyse / réacteur est le recyclage individuel du fluor émis par chaque cuve d'électrolyse, ce qui permet un fonctionnement optimisé de la cuve d'électrolyse.

En effet, le fluor quittant la cuve d'électrolyse sous forme de fluorure d'hydrogène retourne directement dans la cuve d'électrolyse sous forme d'alumine fluorée. La quantité de fluor « perdu » individuellement par chaque cuve d'électrolyse est sensiblement égale à la quantité de fluor retournant dans chacune de ces cuves d'électrolyse, assurant un équilibrage optimal des flux de fluor et simplifiant les procédés de régulation de l'alimentation des cuves d'électrolyse.

Selon un mode de réalisation préféré, le circuit de traitement de gaz comprend un circuit d'alimentation en alumine configuré pour alimenter en alumine le deuxième étage de traitement, et le deuxième étage de traitement comprend un réacteur configuré pour fixer par adsorption le dioxyde de soufre sur de l'alumine provenant de ce circuit d'alimentation en alumine.

Cette caractéristique permet de traiter le dioxyde de soufre présent dans les gaz de cuve sans recourir à l'utilisation d'un laveur humide comme dans l'état de la technique, ce qui permet de réduire sensiblement les coûts. Le premier étage de traitement a permis d'abaisser la concentration en fluorure d'hydrogène dans les gaz de façon suffisante pour que l'adsorption du dioxyde de soufre sur l'alumine dans le deuxième étage de traitement permette un traitement efficace du dioxyde de soufre. En effet, l'adsorption préférentielle du fluorure d'hydrogène sur l'alumine par rapport à l'adsorption du dioxyde de soufre sur l'alumine rend un traitement du dioxyde de soufre non efficace si la concentration en fluorure d'hydrogène est trop importante.

Cette caractéristique permet aussi d'améliorer l'efficacité du traitement des gaz de cuve car le deuxième étage de traitement permet ainsi, par une mise en contact des gaz de cuve avec de l'alumine fraîche, de fixer d'une part le flurorure d'hydrogène résiduel restant dans les gaz de cuve après traitement dans les réacteurs du premier étage de traitement, et d'autre part de fixer une part significative du dioxyde de soufre. Le fluorure d'hydrogène est donc traité en deux étages successifs pour plus d'efficacité.

Selon un mode de réalisation préféré, l'usine d'électrolyse comprend un dispositif de désorption configuré pour permettre la désorption du dioxyde de soufre fixé sur l'alumine, le dispositif de désorption comprenant une entrée reliée au deuxième étage de traitement de manière à collecter l'alumine sulfurée résultant du traitement du dioxyde de soufre dans le deuxième étage de traitement par adsorption du dioxyde de soufre sur l'alumine, et une sortie reliée à la deuxième entrée des réacteurs du premier étage de traitement, de sorte que l'alumine alimentant les réacteurs du premier étage de traitement est l'alumine désulfurée issue du dispositif de désorption.

Un avantage de cette caractéristique est que l'alumine utilisée pour le traitement des gaz, aussi bien dioxyde de soufre que fluorure d'hydrogène, débouche dans les cuves d'électrolyse afin d'alimenter la réaction d'électrolyse au sein des cuves d'électrolyse. Cela permet des économies de matières premières, et limite l'encombrement. Ce traitement de désorption peut avantageusement se faire par méthode thermique, impliquant une exposition de l'alumine sulfurée à des températures permettant la désorption, en utilisant de la chaleur récupérée à partir des gaz de cuve.

De plus, par son retour dans le premier étage de traitement, où transitent les gaz de cuve de température encore élevée sortant directement de la ou des cuves d'électrolyse, l'alumine est séchée après la désorption, ce qui permet de baisser les émissions de fluorure d'hydrogène selon un cycle vertueux, comme cela a été décrit précédemment.

Cela est particulièrement avantageux quand de la vapeur d'eau est utilisée comme fluide de désorpion dans le dispositif de désorption.

On notera que le dispositif de désorption est configuré pour que seul le dioxyde de soufre soit désorbé, mais pas le fluor résiduel adsorbé dans le deuxième étage de traitement.

Avantageusement l'énergie récupérée dans l'échangeur thermique est utilisée pour échauffer un fluide de désorption destiné à être injecté dans le dispositif de désorption.

Selon un mode de réalisation préféré, l'échangeur de chaleur comprend un circuit de circulation de fluide caloporteur configuré pour diminuer la température des gaz de cuve sortant des réacteurs du premier étage de traitement par échauffement du fluide caloporteur circulant dans ce circuit de circulation de fluide caloporteur, et le circuit de circulation de fluide caloporteur est configuré pour transférer la chaleur du fluide caloporteur échauffé à un fluide de désorption destiné à être injecté dans le dispositif de désorption.

Cette caractéristique permet de valoriser la température encore élevée des gaz de cuve en sortie du premier étage de traitement. Cela augmente ainsi le rendement énergétique global.

Le fluide caloporteur est par exemple de l'eau.

De préférence, le fluide de désorption est de la vapeur d'eau.

Cela permet une désorption efficace à moindres coûts. De plus, un sous-produit issu de la désorption est de l'acide sulfurique, qui est aisément valorisable.

Alternativement, le fluide de désorption destiné à être injecté dans le dispositif de désorption peut être un gaz chaud ou un mélange de gaz chaud, comme par exemple de l'azote. On notera que par gaz chaud on entend gaz dont la température est au moins égale à 350°, de préférence au moins égale à 400°. La température du gaz chaud est en fait adaptée pour provoquer la désorption du dioxyde de soufre ; cette température est par exemple comprise dans l'intervalle [400-700]°C, voire [400-1000]°C.

Alternativement, l'échangeur de chaleur comprend un circuit de circulation de fluide caloporteur configuré pour diminuer la température des gaz de cuve sortant des réacteurs du premier étage de traitement par échauffement du fluide caloporteur circulant dans ce circuit de circulation de fluide caloporteur, et le fluide caloporteur est utilisé directement comme fluide de désorption destiné à être injecté dans le dispositif de désorption.

Ce fluide caloporteur et de désorption est avantageusement de l'eau liquide et/ou vapeur.

Selon un mode de réalisation préféré, l'usine d'électrolyse comprend une unité de traitement configurée pour traiter le fluide de désorption ayant servi à désorber le dioxyde de soufre présent sur l'alumine sulfurée.

Cela limite l'impact environnemental de la désorption.

Par désorber on entend séparer, en l'occurrence le dioxyde de soufre de l'alumine sur laquelle le dioxyde de soufre était initialement adsorbé.

Selon un mode de réalisation préféré, le circuit de traitement des gaz comprend un dispositif d'humidification en amont du deuxième étage de traitement.

Cette caractéristique offre l'avantage d'améliorer le rendement de traitement du dioxyde de soufre dans le deuxième étage de traitement.

Selon un mode de réalisation préféré, le circuit de traitement des gaz comprend un troisième étage de traitement configuré pour traiter le dioxyde de carbone présent dans les gaz de cuve.

Un avantage de cette caractéristique est de réduire l'impact de la production d'aluminium par électrolyse sur l'environnement.

L'invention concerne aussi un procédé de traitement des gaz de cuve émis par les cuves d'électrolyse d'une série de cuves d'électrolyse d'une usine d'électrolyse, notamment une usine d'électrolyse ayant les caractéristiques précitées, le procédé comprenant les étapes :
- traiter du fluorure d'hydrogène présent dans les gaz de cuve dans un premier étage de traitement,
- traiter du dioxyde de soufre présent dans les gaz de cuve dans un deuxième étage de traitement,
le procédé étant caractérisé en ce que qu'il comprend une étape consistant à refroidir les gaz de cuve avec un échangeur de chaleur après traitement des gaz de cuve dans le premier étage de traitement et avant traitement des gaz de cuve dans le deuxième étage de traitement.

Ce procédé permet d'obtenir des performances de traitement et un rendement énergétique améliorés.

Un avantage est d'abaisser la température des gaz de cuve à un niveau compatible avec l'adsorption du dioxyde de soufre sur l'alumine dans le deuxième étage de traitement, par exemple jusqu'à une température inférieure ou égale à 100°C, et donc d'améliorer le rendement de traitement du dioxyde de soufre. Cela offre aussi l'avantage de minimiser le volume de gaz à traiter dans le deuxième étage de traitement, dont le coût est très fortement lié au volume des gaz à traiter.

Le traitement du fluorure d'hydrogène dans le premier étage de traitement peut comprendre l'injection d'alumine dans ce premier étage de traitement afin de fixer par adsorption le fluorure d'hydrogène sur l'alumine injectée.

Le traitement du dioxyde de soufre dans le deuxième étage de traitement peut comprendre l'injection d'alumine dans ce deuxième étage de traitement afin de fixer par adsorption le dioxyde de soufre sur l'alumine injectée.

Selon un mode de réalisation préféré, l'étape consistant à traiter du fluorure d'hydrogène présent dans les gaz de cuve dans un premier étage de traitement comprend le traitement du fluorure d'hydrogène en parallèle dans une pluralité de réacteurs, chaque réacteur étant associé à un groupe de cuves d'électrolyse de la série de cuves d'électrolyse, chaque groupe de cuves d'électrolyse comprenant une ou plusieurs cuves d'électrolyse de la série de cuves d'électrolyse.

Ce procédé offre un traitement plus efficace du fluorure d'hydrogène, en raison du traitement en parallèle et par groupe de cuves d'électrolyse du fluorure d'hydrogène. Ce procédé permet donc notamment le traitement de gaz de cuve présentant une concentration élevée en fluorure d'hydrogène.

Selon un mode de réalisation préféré, le procédé comprend l'étape : préchauffer de l'alumine destinée à alimenter les cuves d'électrolyse de chaque groupe de cuves d'électrolyse par transfert thermique entre ladite alumine et les gaz de cuve collectés par le réacteur associé au groupe de cuves d'électrolyse correspondant.

Ce préchauffage permet de réduire la consommation spécifique d'énergie des cuves d'électrolyse, et aussi de « sécher » l'alumine, ce qui permet de baisser les émissions de fluorure d'hydrogène à la cuve, comme expliqué précédemment.

Le préchauffage peut être effectué à l'intérieur de chacun des réacteurs du premier étage de traitement. Avantageusement, l'alumine préchauffée est introduite directement dans la cuve d'électrolyse sans passage intermédiaire dans une trémie ou un autre équipement de stockage entre le réacteur du premier étage et la cuve d'électrolyse.

Selon un mode de réalisation préféré, ledit transfert thermique est réalisé par contact direct entre ladite alumine et lesdits gaz de cuve.

Autrement dit, l'alumine destinée à alimenter les cuves d'électrolyse est injectée dans les réacteurs du premier étage de traitement.

Cela améliore le rendement du transfert thermique. Le contact direct permet aussi l'adsorption du fluor sur l'alumine destinée à alimenter la réaction d'électrolyse, c'est-à-dire d'utiliser la même alumine à la fois pour traiter le fluorure d'hydrogène et alimenter la réaction d'électrolyse.

Un avantage de cette caractéristique est donc aussi une consommation moindre en quantité et en type de matières premières, car l'alumine utilisée pour traiter le fluorure d'hydrogène est utilisée pour alimenter la réaction d'électrolyse au sein des cuves d'électrolyse.

Selon un mode de réalisation préféré, le procédé comprend, dans chaque réacteur du premier étage de traitement, l'étape : séparer les gaz de cuve, les particules solides transportées par ces gaz de cuve, et l'alumine fluorée issue de l'adsorption du fluor sur l'alumine injectée dans chaque réacteur.

Cette caractéristique permet de bénéficier de réacteurs assurant plusieurs fonctions, donc de bénéficier d'un équipement compact. Cela offre un gain de place significatif dans l'usine d'électrolyse selon l'invention.

Selon un mode de réalisation préféré, l'étape de traitement du fluorure d'hydrogène présent dans les gaz de cuve dans un premier étage de traitement comprend le traitement du fluorure d'hydrogène par l'intermédiaire d'un réacteur par cuve d'électrolyse.

Le procédé comprend ainsi un traitement individualisé des cuves d'électrolyse. Un avantage de cette individualisation est le recyclage individuel du fluor émis par chaque cuve d'électrolyse, ce qui permet un contrôle simplifié de la teneur en fluor dans les cuves et un fonctionnement optimisé de la cuve d'électrolyse.

Selon un mode de réalisation préféré, le procédé comprend l'étape : alimenter les cuves d'électrolyse exclusivement avec l'alumine fluorée résultant de l'adsorption de fluorure d'hydrogène sur l'alumine injectée dans les réacteurs du premier étage de traitement.

Un avantage de cette caractéristique est que le fluor dégagé par un groupe de cuves sous forme de fluorure d'hydrogène gazeux est renvoyé vers ce même groupe de cuves, sous forme d'alumine fluorée, ce qui permet de mieux contrôler la quantité de fluor présente dans le bain d'électrolyse.

Selon un mode de réalisation préféré, le procédé comprend :
- fixer du dioxyde de soufre sur de l'alumine par adsorption dans un réacteur du deuxième étage de traitement, de manière à obtenir des gaz de cuve épurés en dioxyde de soufre d'une part et de l'alumine sulfurée d'autre part,
- séparer par désorption le dioxyde de soufre présent sur l'alumine sulfurée dans un dispositif de désorption, de manière à obtenir de l'alumine désulfurée,
- injecter l'alumine désulfurée dans les réacteurs du premier étage de traitement en vue d'adsorber le fluor présent dans les gaz de cuve et obtenir de l'alumine fluorée,
- acheminer l'alumine fluorée depuis les réacteurs du premier étage de traitement jusqu'aux cuves d'électrolyse afin d'alimenter en alumine la réaction d'électrolyse.

Un avantage est une économie en matières premières dans le traitement des gaz de cuve puisque l'alumine utilisée pour traiter les gaz de cuve est aussi l'alumine destinée à alimenter les cuves d'électrolyse. L'alumine désulfurée provenant du deuxième étage de traitement contient le fluor résiduel des gaz qui n'a pas été adsorbé dans le premier étage de traitement, auquel s'ajoute le fluor adsorbé dans le premier étage de traitement dans lequel cette alumine désulfurée est introduite.

Selon un mode de réalisation préféré, la séparation par désorption est réalisée par contact direct entre ladite alumine sulfurée et un fluide de désorption, ce fluide de désorption étant de préférence de la vapeur d'eau.

Selon un mode de réalisation préféré, l'étape de refroidissement des gaz de cuve est réalisée par transfert thermique entre les gaz de cuve et un fluide caloporteur, en vue d'obtenir un échauffement du fluide caloporteur, le procédé comprenant en outre l'étape transférer la chaleur du fluide caloporteur ainsi échauffé à un fluide de désorption destiné à être injecté dans le dispositif de désorption pour séparer par désorption le soufre présent sur l'alumine sulfurée.

Ainsi, l'énergie nécessaire à la désorption est fournie par l'échangeur de chaleur, ce qui permet d'améliorer le rendement énergétique.

Le fluide de désorption est préférentiellement de la vapeur d'eau.

Selon un autre mode de réalisation préféré, l'étape de refroidissement des gaz de cuve est réalisée par transfert thermique directement entre les gaz de cuve et un fluide de désorption en vue d'obtenir un échauffement du fluide de désorption destiné à être injecté dans le dispositif de désorption pour séparer par désorption le soufre présent sur l'alumine sulfurée.

Selon un mode de réalisation préféré, le procédé comprend une étape : humidifier les gaz de cuve avant l'étape de traitement du dioxyde de soufre présent dans les gaz de cuve dans un deuxième étage de traitement.

Cette caractéristique offre l'avantage d'améliorer le rendement de traitement du dioxyde de soufre.

Selon un mode de réalisation préféré, le procédé comprend l'étape : capturer du dioxyde de carbone présent dans les gaz de cuve.

Un avantage de cette caractéristique est de réduire l'impact de la production d'aluminium par électrolyse sur l'environnement, et notamment sur les émissions de gaz à effet de serre.

L'invention concerne aussi une usine d'électrolyse destinée à la production d'aluminium par électrolyse, cette usine d'électrolyse comprenant une série de cuves d'électrolyse et un circuit de traitement de gaz destiné à traiter des gaz de cuve générés par la série de cuves d'électrolyse au cours de la réaction d'électrolyse,
le circuit de traitement de gaz comprenant un premier étage de traitement configuré pour traiter du fluorure d'hydrogène présent dans les gaz de cuve, un deuxième étage de traitement configuré pour traiter du dioxyde de soufre présent dans les gaz de cuve et un circuit d'alimentation en alumine configuré pour alimenter en alumine le premier étage de traitement,
caractérisée en ce que le premier étage de traitement comprend une pluralité de réacteurs, chaque réacteur étant associé à un groupe de cuves d'électrolyse, chaque groupe de cuves d'électrolyse comprenant une ou plusieurs cuves d'électrolyse de la série de cuves d'électrolyse, et chaque réacteur comprend :
- une première entrée reliée au groupe de cuves d'électrolyse associé, en vue de collecter les gaz de cuve générés par ledit groupe de cuves d'électrolyse,
- une deuxième entrée reliée au circuit d'alimentation en alumine pour alimenter chaque réacteur en alumine, en vue de fixer par adsorption du fluorure d'hydrogène présent dans les gaz de cuve sur ladite alumine, et
- une première sortie pour conduire les gaz de cuve traités dans le premier étage de traitement vers le deuxième étage de traitement.

Ainsi, l'usine d'électrolyse offre l'avantage de traiter le fluorure d'hydrogène dans une pluralité de réacteurs en parallèle, chaque réacteur étant affecté au traitement des gaz de cuve d'un groupe de cuves d'électrolyse.

Il en résulte un traitement plus efficace que dans l'état de la technique, ce qui permet de traiter des gaz de cuve présentant des concentrations élevées en fluorure d'hydrogène et dioxyde de soufre.

Il en résulte également une réduction de la taille de ces réacteurs, ce qui permet un gain de place significatif dans l'usine d'électrolyse. Cela permet aussi, dans le cas de cuves d'électrolyse de dernière génération, de positionner ces réacteurs à proximité de ces cuves d'électrolyse afin de tirer profit de la température élevée des gaz de cuve.

Le deuxième étage de traitement comprend un réacteur configuré pour fixer par adsorption le dioxyde de soufre sur de l'alumine provenant de ce circuit d'alimentation en alumine.

On notera que le deuxième étage de traitement peut comprendre un réacteur configuré pour séparer l'alumine sulfurée, issue de l'adsorption du dioxyde de soufre sur l'alumine fraîche, des gaz de cuve débarrassés du dioxyde de soufre. A cette fin, le réacteur du deuxième étage de traitement peut comporter un filtre à manche.

Ainsi, en sortie du deuxième étage de traitement, les gaz de cuve sont épurés en dioxyde de soufre (et en fluorure d'hydrogène, grâce au premier étage de traitement précédant le deuxième étage de traitement).

L'usine d'électrolyse peut aussi comprendre tout ou partie des caractéristiques et avantages associés ayant été précédemment mentionnés en lien avec l'usine d'électrolyse décrite précédemment. Ainsi, l'usine d'électrolyse peut comporter les caractéristiques avantageuses suivantes.

Selon un mode de réalisation préféré, chaque réacteur est configuré pour préchauffer de l'alumine destinée à alimenter le groupe de cuves d'électrolyse auquel ce réacteur est associé, par transfert thermique entre les gaz de cuve circulant dans ce réacteur et ladite alumine et chaque réacteur comprend une deuxième sortie pour alimenter le groupe de cuves d'électrolyse avec l'alumine préchauffée au sein du réacteur par les gaz de cuve.

Selon un mode de réalisation préféré, chaque réacteur comprend une enceinte délimitant un volume dans lequel circulent à la fois les gaz de cuve provenant du groupe de cuves d'électrolyse associé et l'alumine destinée à alimenter ce groupe de cuves d'électrolyse, l'enceinte étant configurée pour permettre un transfert thermique par contact direct entre les gaz de cuve et l'alumine destinée à alimenter le groupe de cuves d'électrolyse associé.

L'alumine alimentant chaque groupe de cuves d'électrolyse est donc aussi l'alumine fluorée résultant de l'adsorption du fluorure d'hydrogène sur l'alumine au sein du réacteur associé à ce groupe de cuves d'électrolyse. Cela revient à dire que l'alumine utilisée pour le circuit de traitement de gaz est aussi l'alumine utilisée pour la réaction d'électrolyse.

L'alumine destinée à alimenter les cuves d'électrolyse transite préalablement par les réacteurs du premier étage de traitement : cette alumine entre par la deuxième entrée des réacteurs, adsorbe le fluor au sein des réacteurs, et sort des réacteurs via la deuxième sortie en direction des cuves d'électrolyse.

Selon un mode de réalisation préféré, chaque réacteur du premier étage de traitement est configuré pour séparer les gaz de cuve, les particules solides transportées par ces gaz de cuve, et l'alumine fluorée issue de l'adsorption du fluor sur l'alumine injectée dans le réacteur via la deuxième entrée.

Selon un mode de réalisation préféré, les réacteurs du premier étage de traitement sont des réacteurs cycloniques.

Selon un mode de réalisation préféré, chaque réacteur est agencé à moins de 40 mètres, notamment à moins de 20 mètres, et de préférence à moins de 10 mètres, de chaque cuve d'électrolyse du groupe de cuves d'électrolyse auquel ce réacteur est associé.

Selon un mode de réalisation préféré, chaque groupe de cuves d'électrolyse comprend au maximum quatre, de préférence au maximum trois, cuves d'électrolyse de la série de cuves d'électrolyse.

Selon un mode de réalisation préféré, chaque groupe de cuves d'électrolyse comprend plusieurs cuves d'électrolyse et les cuves d'électrolyse de chaque groupe de cuves d'électrolyse sont des cuves d'électrolyse adjacentes de la série de cuves d'électrolyse.

Selon un mode de réalisation préféré, chaque groupe de cuves d'électrolyse comprend une unique cuve d'électrolyse.

Selon un mode de réalisation préféré, l'usine d'électrolyse comprend un dispositif de désorption conçu pour permettre la désorption du dioxyde de soufre fixé sur l'alumine, le dispositif de désorption comprenant une entrée reliée au deuxième étage de traitement de manière à collecter l'alumine sulfurée résultant du traitement du dioxyde de soufre dans le deuxième étage de traitement par adsorption du dioxyde de soufre sur l'alumine, et une sortie reliée à la deuxième entrée des réacteurs du premier étage de traitement, de sorte que l'alumine alimentant les réacteurs du premier étage de traitement est l'alumine désulfurée issue du dispositif de désorption.

On notera que le dispositif de désorption est configuré pour que seul le dioxyde de soufre soit désorbé, mais pas le fluor résiduel adsorbé dans le deuxième étage de traitement.

Selon un mode de réalisation préféré, le circuit de traitement de gaz comprend un échangeur de chaleur interposé entre le premier étage de traitement et le deuxième étage de traitement.

Un avantage de cette caractéristique est d'abaisser la température des gaz de cuve à un niveau compatible avec l'adsorption du dioxyde de soufre sur l'alumine dans le deuxième étage de traitement, par exemple jusqu'à une température inférieure ou égale à 100°C, ou inférieure ou égale à 70°C, et donc d'améliorer le rendement de traitement du dioxyde de soufre.

Cette caractéristique offre aussi l'avantage de minimiser le volume de gaz à traiter dans le deuxième étage de traitement, dont le coût est très fortement lié au volume des gaz à traiter.

Les échangeurs thermiques associés aux gaz de cuve sont traditionnellement disposés en amont des centres de traitement des gaz destinés à traiter le fluorure d'hydrogène. Un tel positionnement traditionnel résulte de la volonté de profiter au maximum dans les échangeurs thermiques de la chaleur contenue dans les gaz de cuve, donc avant mise en contact de ces gaz avec de l'alumine, et du besoin d'abaisser la température des gaz de cuve pour pouvoir utiliser les systèmes de filtration traditionnels à filtres qui ne sont pas efficients lorsque la température des gaz est élevée.

La demanderesse a trouvé qu'au contraire, le positionnement d'un échangeur de chaleur après le premier étage de traitement et avant le second étage de traitement était particulièrement avantageux.

En effet, le passage de gaz ayant une température élevée, notamment supérieure à 150°C, dans le premier étage de traitement des gaz, assure une bonne sélectivité de l'adsorption du fluor sur l'alumine par rapport à l'adsorption du dioxyde de soufre sur l'alumine. Ainsi, le dioxyde de soufre n'est pas adsorbé sur l'alumine dans le premier étage de traitement des gaz et n'est pas renvoyé vers la cuve d'électrolyse avec l'alumine fluorée dans la première étape de traitement des gaz.

Aussi, le transfert thermique évoqué ci-dessus pour le préchauffage de l'alumine dans le premier étage de traitement des gaz est d'autant plus efficace que la température des gaz est élevée et aboutit à une valorisation directe de l'énergie tirée de la chaleur des gaz, contrairement à l'énergie obtenue via un échangeur thermique, de sorte que cette solution est particulièrement avantageuse.

De plus, le cas échéant, lorsque le réacteur du premier étage de traitement est configuré pour séparer les gaz de cuve et les particules solides transportées par ces gaz de cuve, par exemple lorsque ce réacteur est un réacteur cyclonique, les poussières sont déjà enlevées du flux de gaz traversant l'échangeur thermique, de sorte que l'échangeur thermique ne s'encrasse pas comme c'est le cas avec son positionnement traditionnel.

En outre, la demanderesse a observé que l'abaissement de la température des gaz avant leur passage dans le deuxième étage de traitement des gaz, notamment en dessous de 100°C et de préférence en dessous de 70°C, permet de faciliter l'étape de désorption du dioxyde de soufre adsorbé sur l'alumine. En effet, un abaissement de la température de gaz contenant du soufre favorise l'adsorption par physisorption du dioxyde de soufre sur l'alumine au détriment de l'adsorption par chimisorption du dioxyde de soufre sur l'alumine. Or, la désorption du dioxyde de soufre physisorbé sur de l'alumine requiert moins d'énergie que la désorption du dioxyde de soufre chimisorbé sur de l'alumine. Un tel abaissement de la température, en sus de pouvoir être valorisé par l'énergie résultant de l'échange thermique, participe de façon avantageuse à un abaissement de l'énergie globale nécessaire au fonctionnement du centre de traitement des gaz et de l'usine d'électrolyse.

Aussi, l'abaissement de la température des gaz avant leur passage dans le deuxième étage de traitement des gaz permet de s'assurer que le flurorure d'hydrogène résiduel restant dans les gaz de cuve après traitement dans le premier étage de traitement est complètement adsorbé, l'adsorption du fluorure d'hydrogène étant elle-même plus efficace lorsque la température est abaissée.

En somme, il découle de ce qui précède que le fait de placer un échangeur thermique à l'aval du premier étage de traitement et à l'amont du deuxième étage de traitement améliore sensiblement le rendement énergétique de traitement des gaz de cuve et les performances de traitement des gaz de cuve, si bien que cette caractéristique rend l'usine d'électrolyse adapté au traitement de gaz de cuve présentant des concentrations fortes en fluorure d'hydrogène et en dioxyde de soufre.

Le circuit de traitement de gaz de l'usine d'électrolyse est ainsi particulièrement adapté aux cuves d'électrolyse de type récent, c'est-à-dire dans lesquelles la température des gaz de cuve atteint des valeurs élevées, (supérieures à 200°C, et plus particulièrement comprise entre 300-400°C au lieu de 100-150°C pour les cuves de générations plus anciennes), présentant un débit d'aspiration faible des gaz de cuve (comprise entre 15 000 et 50 000 Nm³/tAl au lieu d'être typiquement comprise entre 70 000 et 120 000 Nm³/tAl pour les technologies existantes les cuves de générations plus anciennes), et/ou une concentration élevée en fluorure d'hydrogène, dioxyde de soufre et poussières à l'intérieur de ces cuves (pour le fluorure d'hydrogène égale ou supérieure à 1000-2000 mg/Nm³ au lieu de concentrations d'environ 200-400 mg/Nm³ pour les cuves de générations plus anciennes).

L'échangeur de chaleur est avantageusement adapté pour abaisser la température des gaz de cuve d'une température de 400°C en entrée de l'échangeur de chaleur à une température inférieure ou égale à 100°C et de préférence inférieure ou égale à 70°C en sortie de l'échangeur de chaleur.

Ainsi, l'usine d'électrolyse est performante pour traiter les gaz de cuve générés par les cuves d'électrolyse les plus récentes, dans lesquelles la température des gaz peut atteindre 200°C et même 300°C voire 400°C.

L'échangeur de chaleur est avantageusement adapté pour abaisser la température des gaz de cuve d'une température de 400°C en entrée de l'échangeur de chaleur à une température inférieure ou égale à 100°C et de préférence inférieure ou égale à 70°C en sortie de l'échangeur de chaleur.

Avantageusement l'énergie récupérée dans l'échangeur thermique est utilisée pour échauffer un fluide de désorption destiné à être injecté dans le dispositif de désorption.

Selon un mode de réalisation préféré, l'échangeur de chaleur comprend un circuit de circulation de fluide caloporteur configuré pour diminuer la température des gaz de cuve sortant des réacteurs du premier étage de traitement par échauffement du fluide caloporteur circulant dans ce circuit de circulation de fluide caloporteur, et le circuit de circulation de fluide caloporteur est configuré pour transférer la chaleur du fluide caloporteur échauffé à un fluide de désorption destiné à être injecté dans le dispositif de désorption.

Le fluide caloporteur est par exemple de l'eau.

De préférence, le fluide de désorption est de la vapeur d'eau.

Alternativement, le fluide de désorption destiné à être injecté dans le dispositif de désorption peut être un gaz chaud ou un mélange de gaz chaud, comme par exemple de l'azote. On notera que par gaz chaud on entend gaz dont la température est au moins égale à 350°, de préférence au moins égale à 400°. La température du gaz chaud est en fait adaptée pour provoquer la désorption du dioxyde de soufre ; cette température est par exemple comprise dans l'intervalle [400-700]°C, voire [400-1000]°C.

Selon un mode de réalisation préféré, l'usine d'électrolyse comprend une unité de traitement configurée pour traiter le fluide de désorption ayant servi à désorber le dioxyde de soufre présent sur l'alumine sulfurée.

Alternativement, l'échangeur de chaleur comprend un circuit de circulation de fluide caloporteur configuré pour diminuer la température des gaz de cuve sortant des réacteurs du premier étage de traitement par échauffement du fluide caloporteur circulant dans ce circuit de circulation de fluide caloporteur, et le fluide caloporteur est utilisé directement comme fluide de désorption destiné à être injecté dans le dispositif de désorption.

Ce fluide caloporteur et de désorption est avantageusement de l'eau liquide et/ou vapeur.

Selon un mode de réalisation préféré, le circuit de traitement des gaz comprend un dispositif d'humidification en amont du deuxième étage de traitement.

Selon un mode de réalisation préféré, le circuit de traitement des gaz comprend un troisième étage de traitement configuré pour traiter le dioxyde de carbone présent dans les gaz de cuve.

L'invention concerne aussi un procédé de traitement des gaz de cuve émis par les cuves d'électrolyse d'une série de cuves d'électrolyse d'une usine d'électrolyse, le procédé comprenant les étapes :
- traiter du fluorure d'hydrogène présent dans les gaz de cuve dans un premier étage de traitement,
- traiter du dioxyde de soufre présent dans les gaz de cuve dans un deuxième étage de traitement,
le procédé étant caractérisé en ce qu'il comprend l'étape consistant à traiter du fluorure d'hydrogène présent dans les gaz de cuve dans un premier étage de traitement comprend le traitement du fluorure d'hydrogène en parallèle dans une pluralité de réacteurs, chaque réacteur étant associé à un groupe de cuves d'électrolyse de la série de cuves d'électrolyse, chaque groupe de cuves d'électrolyse comprenant une ou plusieurs cuves d'électrolyse de la série de cuves d'électrolyse.

Ce procédé offre un traitement plus efficace du fluorure d'hydrogène, en raison du traitement en parallèle et par groupe de cuves d'électrolyse du fluorure d'hydrogène. Ce procédé permet donc notamment le traitement de gaz de cuve présentant une concentration élevée en fluorure d'hydrogène.

Le traitement du fluorure d'hydrogène dans le premier étage de traitement peut comprendre l'injection d'alumine dans ce premier étage de traitement afin de fixer par adsorption le fluorure d'hydrogène sur l'alumine injectée.

Le traitement du dioxyde de soufre dans le deuxième étage de traitement peut comprendre l'injection d'alumine dans ce deuxième étage de traitement afin de fixer par adsorption le dioxyde de soufre sur l'alumine injectée.

Ce procédé peut aussi comprendre tout ou partie des caractéristiques et avantages associés ayant été précédemment décrits en lien avec le procédé décrit précédemment. Ainsi, ceprocédé peut comporter les caractéristiques avantageuses suivantes.

Selon un mode de réalisation préféré, le procédé comprend l'étape : préchauffer de l'alumine destinée à alimenter les cuves d'électrolyse de chaque groupe de cuves d'électrolyse par transfert thermique entre ladite alumine et les gaz de cuve collectés par le réacteur associé au groupe de cuves d'électrolyse correspondant.

Selon un mode de réalisation préféré, ledit transfert thermique est réalisé par contact direct entre ladite alumine et lesdits gaz de cuve.

Autrement dit, l'alumine destinée à alimenter les cuves d'électrolyse est injectée dans les réacteurs du premier étage de traitement.

Selon un mode de réalisation préféré, le procédé comprend, dans chaque réacteur du premier étage de traitement, l'étape : séparer les gaz de cuve, les particules solides transportées par ces gaz de cuve, et l'alumine fluorée issue de l'adsorption du fluor sur l'alumine injectée dans chaque réacteur.

Selon un mode de réalisation préféré, l'étape de traitement du fluorure d'hydrogène présent dans les gaz de cuve dans un premier étage de traitement comprend le traitement du fluorure d'hydrogène par l'intermédiaire d'un réacteur par cuve d'électrolyse.

Selon un mode de réalisation préféré, le procédé comprend l'étape : alimenter les cuves d'électrolyse exclusivement avec l'alumine fluorée résultant de l'adsorption de fluorure d'hydrogène sur l'alumine injectée dans les réacteurs du premier étage de traitement.

Selon un mode de réalisation préféré, le procédé comprend :
- fixer du dioxyde de soufre sur de l'alumine par adsorption dans un réacteur du deuxième étage de traitement, de manière à obtenir des gaz de cuve épurés en dioxyde de soufre d'une part et de l'alumine sulfurée d'autre part,
- séparer par désorption le dioxyde de soufre présent sur l'alumine sulfurée dans un dispositif de désorption, de manière à obtenir de l'alumine désulfurée,
- injecter l'alumine désulfurée dans les réacteurs du premier étage de traitement en vue d'adsorber le fluor présent dans les gaz de cuve et obtenir de l'alumine fluorée,
- acheminer l'alumine fluorée depuis les réacteurs du premier étage de traitement jusqu'aux cuves d'électrolyse afin d'alimenter en alumine la réaction d'électrolyse.

Selon un mode de réalisation préféré, le procédé comprend une étape : refroidir les gaz de cuve avant entrée des gaz de cuve dans le deuxième étage de traitement.

Un avantage de cette caractéristique est d'abaisser la température des gaz de cuve à un niveau compatible avec l'adsorption du dioxyde de soufre sur l'alumine dans le deuxième étage de traitement, par exemple jusqu'à une température inférieure ou égale à 100°C, et donc d'améliorer le rendement de traitement du dioxyde de soufre. Cette caractéristique offre aussi l'avantage de minimiser le volume de gaz à traiter dans le deuxième étage de traitement, dont le coût est très fortement lié au volume des gaz à traiter.

Selon un mode de réalisation préféré, l'étape de refroidissement des gaz de cuve est réalisée par transfert thermique entre les gaz de cuve et un fluide caloporteur, en vue d'obtenir un échauffement du fluide caloporteur, le procédé comprenant en outre l'étape transférer la chaleur du fluide caloporteur ainsi échauffé à un fluide de désorption destiné à être injecté dans le dispositif de désorption pour séparer par désorption le soufre présent sur l'alumine sulfurée.

Le fluide de désorption est préférentiellement de la vapeur d'eau.

Selon un autre mode de réalisation préféré, l'étape de refroidissement des gaz de cuve est réalisée par transfert thermique directement entre les gaz de cuve et un fluide de désorption en vue d'obtenir un échauffement du fluide de désorption destiné à être injecté dans le dispositif de désorption pour séparer par désorption le soufre présent sur l'alumine sulfurée.

Selon un mode de réalisation préféré, le procédé comprend une étape : humidifier les gaz de cuve avant l'étape de traitement du dioxyde de soufre présent dans les gaz de cuve dans un deuxième étage de traitement.

Selon un mode de réalisation préféré, le procédé comprend l'étape : capturer du dioxyde de carbone présent dans les gaz de cuve.

D'autres caractéristiques et avantages de la présente invention ressortiront clairement de la description détaillée ci-après d'un mode de réalisation, donné à titre d'exemple non limitatif, en référence aux dessins annexés dans lesquels :
- la figure 1 est une vue schématique d'un mode de réalisation d'une usine d'électrolyse selon l'invention,
- la figure 2 est une vue schématique en coupe d'une cuve d'électrolyse de l'état de la technique,
- la figure 3 est une vue schématique d'un réacteur du premier ou deuxième étage de traitement d'un mode de réalisation d'une usine d'électrolyse selon l'invention.

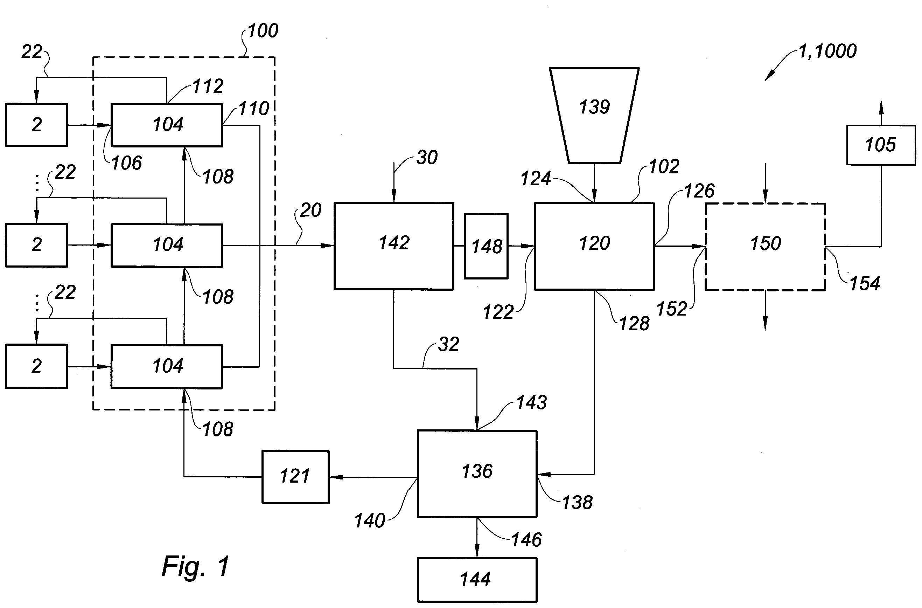

La figure 1 montre une usine 1 d'électrolyse. L'usine 1 d'électrolyse est destinée à la production d'aluminium par électrolyse et est plus particulièrement une aluminerie.

L'usine 1 d'électrolyse comprend une série de cuves 2 d'électrolyse, destinées à la production d'aluminium par électrolyse. Par série de cuves d'électrolyse on entend un ensemble de cuves d'électrolyse reliées électriquement en série les unes aux autres. Cette série de cuves 2 d'électrolyse est destinée à être parcourue par un courant d'électrolyse d'intensité pouvant atteindre plusieurs centaines de milliers d'Ampère.

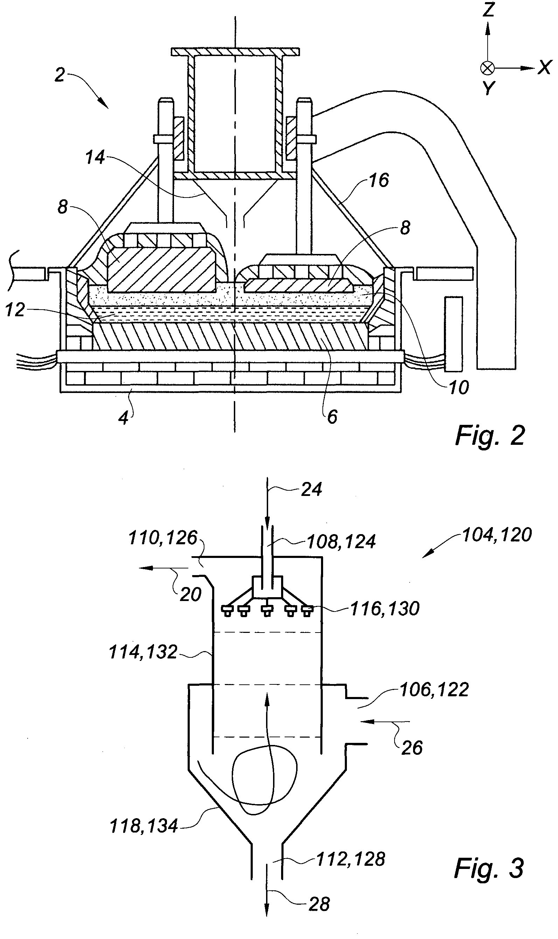

La figure 2 montre un exemple de cuve 2 d'électrolyse destinée à la production d'aluminium par électrolyse. Comme cela est visible sur la figure 2, les cuves 2 d'électrolyse comprennent classiquement un caisson 4, des blocs 6 cathodiques agencés au fond du caisson 4, les blocs 6 cathodiques étant traversés par des barres conductrices destinées à collecter le courant d'électrolyse pour le conduire vers une cuve d'électrolyse suivante dans la série, et des blocs 8 anodiques plongés partiellement dans un bain 10 électrolytique, au-dessus des blocs 6 cathodiques. Une nappe 12 d'aluminium liquide, recouvrant les blocs cathodiques, se forme au fur et à mesure de la réaction. Les cuves 2 d'électrolyse peuvent de plus comprendre une trémie 14 d'alimentation par l'intermédiaire de laquelle les cuves 2 d'électrolyse sont alimentées en alumine. Un ensemble de capots 16 ferme le caisson 4 pour limiter les déperditions de chaleur et des fuites de gaz de cuve générés au cours de la réaction d'électrolyse.

Les cuves 2 d'électrolyse peuvent être des cuves d'électrolyse d'ancienne génération.

De préférence, les cuves 2 d'électrolyse sont des cuves d'électrolyse de génération récente. L'usine 1 d'électrolyse est particulièrement adaptée à des cuves 2 d'électrolyse de génération récente. Par cuves 2 d'électrolyse de type récent on entend des cuves d'électrolyse présentant, en fonctionnement normal, une température élevée des gaz de cuve (supérieure à 200°C, et plus particulièrement comprise entre à 300-400°C), un débit d'aspiration faible des gaz de cuve ([15000-50000] Nm³/tAl), et/ou une concentration élevée en fluorure d'hydrogène, dioxyde de soufre et poussières à l'intérieur de ces cuves (égale ou supérieure à 1000-2000 mg/Nm³). Les cuves d'électrolyse de type récent peuvent présenter des performances d'étanchéité élevées, notamment au niveau de leur ensemble de capots, ce qui explique le faible débit d'aspiration et ses conséquences, à savoir la température et la concentration élevées des gaz de cuve. Ces cuves d'électrolyse récentes sont par exemple celles développées par la demanderesse.

Comme illustré sur la figure 1, l'usine 1 d'électrolyse comprend en outre un circuit de traitement de gaz, le circuit de traitement de gaz étant destiné à traiter des gaz de cuve générés par la série de cuves 2 d'électrolyse au cours de la réaction d'électrolyse.

Dans la suite de la description, amont, aval s'entendent par rapport au sens de circulation des gaz dans le circuit de traitement des gaz.

Le circuit de traitement de gaz comprend un premier étage 100 de traitement, configuré pour traiter du fluorure d'hydrogène présent dans les gaz de cuve, et un deuxième étage 102 de traitement configuré pour traiter du dioxyde de soufre présent dans les gaz de cuve.

Le circuit de traitement de gaz comprend un circuit d'alimentation en alumine configuré pour alimenter en alumine le premier étage 100 de traitement. Ainsi, le traitement du fluorure d'hydrogène présent dans les gaz de cuve est réalisé par adsorption du fluor sur cette alumine.

Le premier étage 100 de traitement comprend une pluralité de réacteurs 104 en parallèle. Chaque réacteur 104 est associé à un groupe de cuves 2 d'électrolyse, c'est-à-dire à au moins une cuve 2 d'électrolyse de la série.

Chaque réacteur 104 est associé à un groupe distinct de cuves 2 d'électrolyse. Autrement dit, chaque groupe de cuves 2 d'électrolyse fonctionne en relation avec un réacteur 104 distinct parmi les réacteurs 104.

Comme illustré sur la figure 1 ou sur la figure 3, chaque réacteur 104 du premier étage 100 de traitement comprend :
- une première entrée 106 reliée au groupe de cuves 2 d'électrolyse associé, en vue de collecter les gaz de cuve générés par ledit groupe de cuves 2 d'électrolyse au cours de la réaction d'électrolyse,
- une deuxième entrée 108 reliée au circuit d'alimentation en alumine pour alimenter chaque réacteur 104 en alumine, en vue de fixer par adsorption du fluorure d'hydrogène présent dans les gaz de cuve sur ladite alumine, et
- une première sortie 110 pour conduire les gaz de cuve traités dans le premier étage 100 de traitement vers le deuxième étage 102 de traitement, comme illustré par la flèche 20.

Les réacteurs 104 sont agencés en parallèle les uns par rapport aux autres. Ainsi, chaque réacteur 104 traite une partie seulement des gaz de cuve générés par la série de cuves 2 d'électrolyse. Plus particulièrement, chaque réacteur 104 traite exclusivement les gaz de cuve du groupe de cuves 2 d'électrolyse auquel ce réacteur 104 est associé, et chaque réacteur 104 peut par conséquent être disposé proche du groupe de cuves 2 d'électrolyse associé.

L'utilisation d'un premier étage 100 de traitement comprenant une pluralité de réacteurs 104 en parallèle associés à des groupes distincts de cuves 2 d'électrolyse suivi d'un deuxième étage 102 de traitement permet d'atteindre des concentrations en fluorure d'hydrogène de l'ordre d'environ [0.5-1.0] mg/Nm³ et en dioxyde de soufre inférieure à 400mg/Nm³ en sortie du circuit de traitement de gaz.

Le circuit de traitement de gaz peut comprendre, en sortie, une cheminée 105 d'évacuation.

Chaque réacteur 104 est avantageusement configuré pour préchauffer de l'alumine destinée à alimenter le groupe de cuves 2 d'électrolyse auquel chaque réacteur 104 est associé.

Ce préchauffage est réalisé au sein de chaque réacteur 104 par transfert thermique entre les gaz de cuve circulant dans chaque réacteur 104 et l'alumine destinée à alimenter le groupe de cuves 2 d'électrolyse auquel chaque réacteur 104 est associé.

Chaque réacteur 104 comprend en outre une deuxième sortie 112 pour alimenter le groupe de cuves 2 d'électrolyse avec l'alumine préchauffée au sein du réacteur 104 par les gaz de cuve, comme cela est représenté par la flèche 22 de la figure 1.

Les réacteurs 104 permettent ainsi de préchauffer l'alumine jusqu'à la température des gaz de cuve, c'est-à-dire notamment jusqu'à 200°C, voir 300-400°C, lorsque les cuves d'électrolyse utilisées sont des cuves d'électrolyse de type récent.

Cela réduit la consommation d'énergie des cuves 2 d'électrolyse, car l'énergie apportée par ce préchauffage de l'alumine alimentant les cuves 2 d'électrolyse n'est pas prélevée dans les cuves 2 d'électrolyse elles-mêmes, contrairement à l'état de la technique, mais dans les gaz de cuve circulant dans le circuit de traitement des gaz de cuve. Par exemple, la consommation spécifique des cuves 2 d'électrolyse peut ainsi être réduite d'environ 100kWh/tAl (100 kWh par tonne d'aluminium produite). Le préchauffage de l'alumine par les gaz de cuve permet une valorisation maximale de l'énergie normalement dissipée dans l'état de la technique.

Ce préchauffage permet aussi de « sécher » l'alumine, c'est-à-dire d'éliminer une partie de l'eau contenue dans l'alumine, ce qui permet de baisser les émissions de fluorure d'hydrogène à la cuve, l'eau contenue dans l'alumine étant une source importante des émissions de fluorure d'hydrogène au contact du bain d'électrolyse.

Plus particulièrement, chaque réacteur 104 comprend une enceinte 114, visible sur la figure 3, délimitant un volume dans lequel circulent à la fois les gaz de cuve provenant du groupe de cuves 2 associé à chaque réacteur 104 et l'alumine destinée à alimenter ce groupe de cuves 2 d'électrolyse. L'enceinte 114 est configurée pour permettre un transfert thermique par contact direct entre les gaz de cuve et l'alumine destinée à alimenter le groupe de cuves 2 d'électrolyse correspondant.

Ainsi, le fluorure d'hydrogène contenu dans les gaz de cuve est traité au moyen de l'alumine qui est destinée à alimenter les cuves d'électrolyse, et en même temps a lieu le transfert thermique permettant le préchauffage. L'alumine alimentant chaque groupe de cuves d'électrolyse est donc aussi l'alumine fluorée résultant de l'adsorption du fluorure d'hydrogène sur l'alumine au sein du réacteur associé à ce groupe de cuves d'électrolyse.

Le fluor dégagé sous forme de fluorure d'hydrogène gazeux par chaque groupe de cuves 2 d'électrolyse est renvoyé vers ce même groupe de cuves 2 d'électrolyse sous forme d'alumine fluorée, ce qui permet de mieux contrôler la quantité de fluor présente dans le bain d'électrolyse.

Pour optimiser le rendement du préchauffage, les réacteurs 104 sont positionnés à proximité du groupe de cuves 2 d'électrolyse auquel chaque réacteur 104 est associé. Plus précisément, les réacteurs 104 sont positionnés en sortie de la ou des cuves 2 d'électrolyse du groupe de cuves 2 d'électrolyse auquel chaque réacteur 104 est associé

Chaque réacteur 104 est avantageusement situé à moins de 40 mètres, notamment à moins de 20 mètres, et de préférence à moins de 10 mètres, de chaque cuve 2 d'électrolyse du groupe de cuves 2 d'électrolyse auquel chaque réacteur 104 est associé.

Plus le réacteur 104 à l'intérieur duquel s'opère le transfert thermique est proche des cuves 2 d'électrolyse auquel ce réacteur 104 est associé, moins les gaz de cuve et l'alumine préchauffée ont le temps de refroidir entre les cuves 2 et le réacteur 104 (pour les gaz de cuve) et entre le réacteur 104 et les cuves 2 d'électrolyse (pour l'alumine fluorée). Le rendement est ainsi amélioré.

Avantageusement, chaque réacteur 104 est configuré pour séparer les gaz de cuve, les particules solides transportées par ces gaz de cuve, et l'alumine fluorée issue de l'adsorption du fluor sur l'alumine injectée dans le réacteur via la deuxième entrée 108.

En particulier, les réacteurs 104 sont adaptés pour séparer les gaz de cuve épurés en fluorure d'hydrogène de l'alumine et des poussières avec un rendement élevé et typiquement supérieur à 90%, pour éviter notamment les risques de dépôts.

Les réacteurs 104 peuvent comprendre à cette fin des filtres à manches pour filtrer les poussières.

Les réacteurs 104 peuvent être des réacteurs standards de type Venturi.

De préférence, les réacteurs 104 sont des réacteurs cycloniques, comme illustré sur la figure 3. Cela offre une filtration efficace, tout en disposant de réacteurs 104 compacts, ce qui permet d'une part de placer les réacteurs 104 au plus près des cuves 2 d'électrolyse pour améliorer le préchauffage et d'autre part de réduire l'encombrement dans l'usine 1 d'électrolyse.

La flèche 24 montre l'entrée d'alumine (de préférence désulfurée comme cela sera décrit ci-après) à l'intérieur du réacteur 104 via la deuxième entrée 108. L'alumine est dispersée par un ensemble de buses 116 de manière à former une pluie de particules.

La flèche 26 montre l'entrée, via la première entrée 106, des gaz de cuve générés par le groupe de cuves 2 d'électrolyse associé à chaque réacteur 104.

La flèche 20 montre l'évacuation des gaz de cuve épurés en fluorure d'hydrogène, via la première sortie 110, et conduits en direction du deuxième étage 102 de traitement.

La première entrée 108 est ici placée à une hauteur inférieure à celle de la première sortie 110. Ainsi, à l'intérieur de l'enceinte 114 des réacteurs 104, les gaz de cuve circulent de façon ascendante, à contre-courant de l'alumine tombant par gravité vers la deuxième sortie 112 depuis l'ensemble de buses 116 placées en haut des réacteurs 104.

L'enceinte 114 est conformée pour générer un cyclone séparant les poussières des gaz de cuve. L'enceinte 114 comprend une paroi 118 en entonnoir conduisant à la deuxième sortie 112.

Au niveau de la deuxième sortie 112, la flèche 28 montre la sortie de l'alumine fluorée et des poussières. L'alumine fluorée est injectée dans les cuves 2 d'électrolyse associées pour alimenter la réaction d'électrolyse.

On notera que chaque groupe de cuves 2 d'électrolyse comprend au maximum quatre, de préférence au maximum trois, cuves 2 d'électrolyse de la série de cuves d'électrolyse. Le premier étagé 100 de traitement comprend donc un réacteur 104 pour au maximum quatre ou trois cuves 2 d'électrolyse.

Cela assure un compromis avantageux entre un nombre minimal de réacteurs 104 afin de réduire les coûts, et un traitement efficace et un emplacement proche des cuves d'électrolyse de chaque réacteur pour réduire la consommation des cuves d'électrolyse.

Dans le cas où chaque groupe de cuves 2 d'électrolyse comprend plusieurs cuves 2 d'électrolyse, et pour permettre le positionnement des réacteurs 104 au plus proche des cuves 2 d'électrolyse auquel ces réacteurs 104 sont associés, les cuves 2 d'électrolyse de chaque groupe de cuves 2 d'électrolyse sont des cuves d'électrolyse adjacentes de la série de cuves 2 d'électrolyse.

Selon un mode de réalisation préféré, chaque groupe de cuves 2 d'électrolyse comprend une unique cuve 2 d'électrolyse. Autrement dit, l'usine 1 d'électrolyse comprend autant de réacteurs 104 que de cuves 2 d'électrolyse, et à chaque réacteur 104 est associée une cuve 2 d'électrolyse distincte.

Cela permet le recyclage individuel du fluor émis par chaque cuve 2 d'électrolyse, ce qui permet un fonctionnement optimisé de chaque cuve 2 d'électrolyse.

Comme illustré par la figure 1, le circuit de traitement de gaz comprend un circuit d'alimentation en alumine configuré pour alimenter en alumine le deuxième étage 102 de traitement. Ainsi, le dioxyde de soufre présent dans les gaz de cuve est traité par adsorption du dioxyde de soufre sur cette alumine.

A cette fin, le deuxième étage 102 de traitement comprend un réacteur 120 configuré pour fixer par adsorption le dioxyde de soufre sur de l'alumine provenant de ce circuit d'alimentation en alumine.

Le deuxième étage 102 de traitement, et plus précisément le réacteur 120, comprend une première entrée 122 reliée au premier étage 100 de traitement pour l'admission des gaz de cuve préalablement traités par le premier étage 100 de traitement dans le deuxième étage 102 de traitement, une deuxième entrée 124 reliée au circuit d'alimentation en alumine pour alimenter le deuxième étage 102 de traitement en alumine, afin de fixer par adsorption du dioxyde de soufre sur ladite alumine, une première sortie 126 pour évacuer les gaz de cuve traités dans le deuxième étage 102 de traitement, c'est-à-dire des gaz de cuve épurés en fluorure d'hydrogène et dioxyde de soufre, et une deuxième sortie 128 pour évacuer l'alumine sulfurée issue de l'adsorption du dioxyde de soufre sur l'alumine injectée dans le deuxième étage 102 de traitement.

Le deuxième 102 étage de traitement est consécutif au premier étage 100 de traitement, c'est-à-dire placé à l'aval du premier étage 100 de traitement. Les gaz de cuve transitent nécessairement par les réacteurs 104 du premier étage 100 de traitement avant de parvenir au deuxième étage 102 de traitement.

Le premier étage 100 de traitement a permis, du fait de sa pluralité de réacteurs 104 en parallèle, d'abaisser la concentration en fluorure d'hydrogène dans les gaz de façon suffisante pour que l'adsorption du dioxyde de soufre sur l'alumine permette un traitement efficace du dioxyde de soufre dans le deuxième étage 102 de traitement. En effet, l'adsorption préférentielle du fluorure d'hydrogène sur l'alumine par rapport à l'adsorption du dioxyde de soufre sur l'alumine rend un traitement du dioxyde de soufre non efficace si la concentration en fluorure d'hydrogène est trop importante.

Le réacteur 120 peut être avantageusement configuré pour séparer l'alumine sulfurée, issue de l'adsorption du dioxyde de soufre sur l'alumine fraîche, des gaz de cuve débarrassés du dioxyde de soufre. A cette fin, le réacteur du deuxième étage 102 de traitement peut être un réacteur cyclonique, comme le réacteur 104 de la figure 3.

De préférence, le deuxième étage 102 de traitement comprend un unique réacteur 120, ou une pluralité de réacteurs 120 disposés côte à côte, ce qui offre un avantage en termes de compacité.

La flèche 24 montre l'entrée d'alumine à l'intérieur du réacteur 120 via la deuxième entrée 124. L'alumine est dispersée par un ensemble de buses 130 de manière à former une pluie de particules.

La flèche 26 montre l'entrée, via la première entrée 122, des gaz de cuve ayant préalablement été traités par le premier étage 100 de traitement.

La flèche 20 montre l'évacuation des gaz de cuve épurés en dioxyde de soufre et fluorure d'hydrogène, via la première sortie 126.

La première entrée 122 est placée à une hauteur inférieure à celle de la première sortie 126. Ainsi, à l'intérieur d'une enceinte 132 du réacteur 120, les gaz de cuve circulent de façon ascendante, à contre-courant de l'alumine tombant par gravité vers la deuxième sortie 128 depuis l'ensemble de buses 130 placées en haut du réacteur 120.

L'enceinte 132 est conformée pour générer un cyclone séparant l'alumine sulfurée des gaz de cuve. L'enceinte 132 comprend une paroi 134 en entonnoir conduisant à la deuxième sortie 128.

Au niveau de la deuxième sortie 128, la flèche 28 montre la sortie de l'alumine sulfurée résultant de l'adsorption du dioxyde de soufre sur l'alumine injectée dans le deuxième étage 102 de traitement.

L'usine 1 d'électrolyse comprend, selon un mode de réalisation préféré, un dispositif 136 de désorption. Le dispositif 136 de désorption est configuré pour permettre la désorption de soufre fixé sur l'alumine sulfurée sortant du deuxième étage 102 de traitement.

Le dispositif 136 de désorption comprend une entrée 138 reliée au deuxième étage 102 de traitement de manière à collecter l'alumine sulfurée résultant du traitement du dioxyde de soufre dans le deuxième étage 102 de traitement par adsorption du dioxyde de soufre sur l'alumine, et une sortie 140 reliée à la deuxième entrée 108 des réacteurs 104 du premier étage 100 de traitement.

Ainsi, l'alumine alimentant les réacteurs 104 du premier étage de traitement est l'alumine désulfurée issue du dispositif 136 de désorption.

Le dispositif 136 de désorption est adapté pour désorber au moins 80% du dioxyde de soufre adsorbé par l'alumine dans le deuxième étage 102 de traitement.

Le dispositif 136 de désorption est configuré pour que seul le dioxyde de soufre soit désorbé, mais pas le fluor résiduel pouvant avoir été adsorbé dans le deuxième étage 102 de traitement.

De préférence quand l'usine 1 d'électrolyse comprend des cuves 2 d'électrolyse de type récent et donc que la température à l'intérieur des réacteurs 104 est élevée (supérieure à 200°C, et plus particulièrement comprise entre 300-400°C), le circuit de traitement de gaz peut en outre comprendre un dispositif 121 d'humidification, agencé entre le dispositif 136 de désorption et les réacteurs 104, pour humidifier l'alumine désulfurée sortant du dispositif 136 de désorption avant entrée de cette alumine dans les réacteurs 104 du premier étage 100 de traitement.

Le circuit de circulation d'alumine de l'usine 1 d'électrolyse sert à la fois à traiter les gaz de cuve et alimenter les cuves 2 d'électrolyse en alumine. Ce circuit d'alimentation en alumine comprend :
- un moyen de stockage optionnel de l'alumine fraîche, comme une trémie 139, conduisant à la deuxième entrée 124 du deuxième étage 102 de traitement,
- le deuxième étage 102 de traitement,
- le dispositif 136 de désorption,
- éventuellement, un dispositif 121 d'humidification pour humidifier l'alumine désulfurée sortant du dispositif 136 de désorption
- les réacteurs 104 du premier étage de traitement,
- les cuves 2 d'électrolyse.

Comme illustré sur la figure 1, l'alumine fraîche est d'abord injectée dans le deuxième étage 102 de traitement, où elle est utilisée pour l'adsorption de dioxyde de soufre. L'alumine sulfurée sortant du deuxième étage 102 de traitement est conduite ensuite jusqu'au dispositif 136 de désorption. L'alumine désulfurée sortant du dispositif 136 de désorption peut être humidifiée, puis est répartie dans les réacteurs 104 du premier étage 100 de traitement, où cette alumine adsorbe le fluor des gaz de cuve tout en se réchauffant sensiblement au contact de ces gaz de cuve. L'alumine fluorée et préchauffée sortant des réacteurs 104 est enfin conduite jusqu'au groupe de cuve(s) 2 d'électrolyse auquel chaque réacteur 104 est associé, en vue d'alimenter la réaction d'électrolyse.

Selon un mode de réalisation préféré, le circuit de traitement de gaz comprend un échangeur 142 de chaleur interposé entre le premier étage 100 de traitement et le deuxième étage 102 de traitement.

L'échangeur 142 de chaleur est de préférence adapté pour abaisser la température des gaz de cuve d'une température de 400°C en entrée de l'échangeur de chaleur à une température inférieure ou égale à 100°C et de préférence inférieure ou égale à 70°C en sortie de l'échangeur de chaleur.

De préférence, l'usine 1 d'électrolyse comprend un unique échangeur 142 de chaleur, pour améliorer la compacité.

L'échangeur 142 de chaleur peut avantageusement inclure un circuit de circulation de fluide caloporteur. Ce circuit de circulation de fluide caloporteur est configuré pour diminuer la température des gaz de cuve sortant des réacteurs 104 du premier étage 100 de traitement par échauffement du fluide caloporteur circulant dans ce circuit de circulation de fluide caloporteur. La chaleur des gaz de cuve est transférée au fluide caloporteur. De plus, le circuit de circulation de fluide caloporteur est configuré pour transférer la chaleur du fluide caloporteur préalablement échauffé par les gaz de cuve à un fluide de désorption, ce fluide de désorption étant destiné à être injecté dans le dispositif 136 de désorption, via une deuxième entrée 143 du dispositif 136 de désorption, pour réaliser la désorption.

Cela permet d'améliorer le rendement de la désorption tout en valorisant l'énergie thermique des gaz de cuve, ce qui améliore donc aussi le rendement énergétique.

Le fluide caloporteur est par exemple de l'eau.

La séparation par désorption peut avantageusement être réalisée par contact direct entre l'alumine sulfurée et le fluide de désorption.

De préférence, le fluide de désorption est de la vapeur d'eau. Ainsi, l'étape de désorption se réalise en exposant l'alumine sulfurée à de la vapeur d'eau surchauffée, c'est-à-dire de la vapeur d'eau à température supérieure ou égale à 120°C.

La flèche 30 de la figure 1 représente l'entrée du fluide de désorption froid dans l'échangeur 142 de chaleur. La flèche 32 représente le fluide de désorption, par exemple la vapeur d'eau surchauffée, ayant été échauffé par le fluide caloporteur qui a lui-même été échauffé par les gaz de cuve circulant dans l'échangeur 142 de chaleur. Comme représenté par la flèche 32, le fluide de désorption circule vers le dispositif 136 de désorption.

Alternativement, le fluide de désorption destiné à être injecté dans le dispositif 136 de désorption peut être un gaz chaud ou un mélange de gaz chaud, par exemple de l'azote. On notera que par gaz chaud on entend gaz dont la température est au moins égale à 350°, de préférence au moins égale à 400°. La température du gaz chaud est en fait adaptée pour provoquer la désorption du dioxyde de soufre. Cette température est supérieure à la température de désorption du dioxyde de soufre, c'est-à-dire supérieure à 200°C ; cette température est par exemple comprise dans l'intervalle [400-700]°C, voire [400-1000]°C.

L'usine 1 d'électrolyse peut comprendre une unité 144 de traitement configurée pour traiter le fluide de désorption ayant servi à désorber le dioxyde de soufre présent sur l'alumine sulfurée. A cet effet, le dispositif 136 de désorption comprend une sortie 146 conduisant le ou les sous-produits de la désorption jusqu'à l'unité 144 de traitement. Par exemple, dans le cas de vapeur d'eau, l'unité 144 de traitement est avantageusement un dispositif de collecte d'acide sulfurique, permettant de collecter l'acide sulfurique résultant de la désorption au moyen de vapeur d'eau, en vue de valoriser cet acide sulfurique.

Le circuit de traitement des gaz comprend avantageusement un dispositif 148 d'humidification en amont du deuxième étage 102 de traitement, en vue d'améliorer le rendement du traitement du dioxyde de soufre dans le deuxième étage 102 de traitement.

Comme illustré sur la figure 1, le circuit de traitement des gaz comprend de préférence un troisième étage 150 de traitement. Le troisième étage 150 de traitement est configuré pour traiter le dioxyde de carbone présent dans les gaz de cuve.

Le troisième étage 150 de traitement comprend une entrée 152 connectée à la première sortie 126 du deuxième étage 102 de traitement pour recevoir les gaz de cuve ayant été préalablement traités par le deuxième étage 102 de traitement, et une sortie 154 pour évacuer les gaz de cuve épurés en dioxyde de carbone, dioxyde de soufre et fluorure d'hydrogène vers la cheminée 105 d'évacuation.

Le troisième étage 150 de traitement comprend par exemple une tour à absorption.

Un procédé de traitement des gaz de cuve émis par les cuves 2 d'électrolyse d'une série de cuves d'électrolyse dans une usine 1 d'électrolyse, notamment l'usine 1 d'électrolyse ayant tout ou partie des caractéristiques décrites ci-dessus, est décrit ci-après. Les mêmes éléments sont donc désignés ci-après par les mêmes références numériques.

Le procédé comprend les étapes :
- traiter du fluorure d'hydrogène présent dans les gaz de cuve dans un premier étage 100 de traitement, et
- traiter du dioxyde de soufre présent dans les gaz de cuve dans un deuxième étage 102 de traitement.

De plus, l'étape consistant à traiter du fluorure d'hydrogène présent dans les gaz de cuve dans un premier étage 100 de traitement comprend le traitement du fluorure d'hydrogène en parallèle dans une pluralité de réacteurs 104, chaque réacteur étant associé à un groupe de cuves 2 d'électrolyse de la série de cuves d'électrolyse, chaque groupe de cuves 2 d'électrolyse comprenant une ou plusieurs cuves 2 d'électrolyse de la série de cuves d'électrolyse.

Chaque réacteur 104 est associé à un groupe de cuves 2 d'électrolyse, c'est-à-dire à au moins une cuve 2 d'électrolyse de la série.

Chaque réacteur 104 est associé à un groupe distinct de cuves 2 d'électrolyse. Autrement dit, chaque groupe de cuves 2 d'électrolyse fonctionne en relation avec un réacteur 104 distinct parmi les réacteurs 104.

Le procédé peut en outre comprendre l'étape : préchauffer de l'alumine destinée à alimenter les cuves 2 d'électrolyse de chaque groupe de cuves 2 d'électrolyse par transfert thermique entre cette alumine et les gaz de cuve collectés par le réacteur 104 associé au groupe de cuves 2 d'électrolyse correspondant.

Ce préchauffage permet de réduire la consommation spécifique d'énergie des cuves d'électrolyse, et aussi de « sécher » l'alumine, ce qui permet de baisser les émissions de fluorure d'hydrogène à la cuve, comme expliqué précédemment.

Le préchauffage peut être effectué à l'intérieur de chacun des réacteurs 104 du premier étage 100 de traitement.

On notera que le transfert thermique est réalisé de préférence par contact direct entre l'alumine destinée à alimenter les cuves 2 d'électrolyse et les gaz de cuve circulant au sein des réacteurs 104.

Ainsi, l'alumine destinée à alimenter les cuves 2 d'électrolyse est injectée dans les réacteurs 104 du premier étage 100 de traitement, où cette alumine adsorbe le fluor contenu dans les gaz de cuve.

Le procédé comprend avantageusement, dans chaque réacteur 104 du premier étage de traitement, l'étape : séparer les gaz de cuve, les particules solides transportées par ces gaz de cuve, et l'alumine fluorée issue de l'adsorption du fluor sur l'alumine injectée dans chaque réacteur 104.

Selon un mode de réalisation préféré, l'étape de traitement du fluorure d'hydrogène présent dans les gaz de cuve dans un premier étage 100 de traitement comprend le traitement du fluorure d'hydrogène par l'intermédiaire d'un réacteur 104 par cuve 2 d'électrolyse.

Le procédé comprend ainsi un traitement individualisé des cuves 2 d'électrolyse. Autrement dit, chaque groupe de cuves 2 d'électrolyse comprend une unique cuve 2 d'électrolyse ; il y a un réacteur 104 du premier étage 100 de traitement par cuve 2 d'électrolyse.

Le procédé peut comprendre l'étape : alimenter les cuves 2 d'électrolyse exclusivement avec l'alumine fluorée résultant de l'adsorption de fluorure d'hydrogène sur l'alumine.

Selon un mode de réalisation préféré, le procédé comprend :
- fixer du dioxyde de soufre sur de l'alumine par adsorption dans un réacteur 120 du deuxième étage 102 de traitement, de manière à obtenir des gaz de cuve épurés en dioxyde de soufre d'une part et de l'alumine sulfurée d'autre part,
- séparer par désorption le dioxyde de soufre présent sur l'alumine sulfurée dans un dispositif 136 de désorption, de manière à obtenir de l'alumine désulfurée,
- injecter l'alumine désulfurée dans les réacteurs 104 du premier étage 100 de traitement en vue d'adsorber le fluor présent dans les gaz de cuve et obtenir de l'alumine fluorée,
- acheminer l'alumine fluorée depuis les réacteurs 104 du premier étage 100 de traitement jusqu'aux cuves 2 d'électrolyse afin d'alimenter en alumine la réaction d'électrolyse.

La séparation par désorption peut avantageusement être réalisée par contact direct entre l'alumine sulfurée et le fluide de désorption.

Le procédé comprend avantageusement l'étape : refroidir les gaz de cuve avant entrée des gaz de cuve dans le deuxième étage 102 de traitement, entre le premier étage 100 de traitement et le deuxième étage 102 de traitement, par l'intermédiaire d'un échangeur 142 de chaleur.

Cette étape de refroidissement des gaz de cuve peut être réalisée par transfert thermique entre les gaz de cuve et un fluide caloporteur, en vue d'obtenir un échauffement du fluide caloporteur, le procédé comprenant en outre l'étape transférer la chaleur du fluide caloporteur ainsi échauffé à un fluide de désorption destiné à être injecté dans le dispositif 136 de désorption pour séparer par désorption le soufre présent sur l'alumine sulfurée.

Ainsi, l'énergie nécessaire à la désorption est fournie par l'échangeur 142 de chaleur, ce qui permet d'améliorer le rendement énergétique.

Le fluide de désorption est préférentiellement de la vapeur d'eau.

Le procédé peut comprendre l'étape : humidifier les gaz de cuve avant l'étape de traitement du dioxyde de soufre présent dans les gaz de cuve dans le deuxième étage 102 de traitement, notamment par l'intermédiaire d'un dispositif 148 d'humidification positionné entre le premier étage 100 de traitement et le deuxième étage 102 de traitement, le cas échéant en aval de l'échangeur 142 de chaleur.

Le procédé peut comprendre l'étape : humidifier l'alumine désulfurée destinée à alimenter les réacteurs 104 du premier étage 100 de traitement. Cette étape d'humidification peut être réalisée au moyen d'un dispositif 121 d'humidification positionné entre le dispositif 136 de désorption, en aval de celui-ci, et les réacteurs 104 du premier étage 100 de traitement.

De manière avantageuse, le procédé comprend l'étape : capturer du dioxyde de carbone présent dans les gaz de cuve, notamment dans un troisième étage 150 de traitement pouvant comprendre une tour à absorption.

Le procédé peut en outre comprendre toute autre étape mentionnée dans la description détaillée ci-dessus de l'usine 1 d'électrolyse.

L'invention concerne une deuxième usine 1000 d'électrolyse, notamment une aluminerie, destinée à la production d'aluminium par électrolyse. Les éléments similaires entre l'usine 1 d'électrolyse décrite ci-dessus et la deuxième usine 1000 d'électrolyse décrite ci-dessous sont désignés par les mêmes références numériques.

A l'instar de l'usine 1 d'électrolyse, la deuxième usine 1000 d'électrolyse comprend une série de cuves 2 d'électrolyse, destinées à la production d'aluminium par électrolyse. Cette série de cuves 2 d'électrolyse est destinée à être parcourue par un courant d'électrolyse d'intensité pouvant atteindre plusieurs centaines de milliers d'Ampère.

La figure 2 montre un exemple de cuve 2 d'électrolyse destinée à la production d'aluminium par électrolyse, telle que décrite précédemment.

Les cuves 2 d'électrolyse peuvent être des cuves d'électrolyse d'ancienne génération.

De préférence, les cuves 2 d'électrolyse sont des cuves d'électrolyse de génération récente, comme décrites précédemment en lien avec l'usine 1 d'électrolyse. Ces cuves d'électrolyse récentes sont par exemple celles développées par la demanderesse. L'usine 1000 d'électrolyse est particulièrement adaptée à des cuves 2 d'électrolyse de génération récente.

Comme l'usine 1 d'électrolyse décrite précédemment, et comme illustré sur la figure 1, l'usine 1000 d'électrolyse comprend en outre un circuit de traitement de gaz, le circuit de traitement de gaz étant destiné à traiter des gaz de cuve générés par la série de cuves 2 d'électrolyse au cours de la réaction d'électrolyse.

Le circuit de traitement de gaz comprend un premier étage 100 de traitement, configuré pour traiter du fluorure d'hydrogène présent dans les gaz de cuve, et un deuxième étage 102 de traitement configuré pour traiter du dioxyde de soufre présent dans les gaz de cuve.

Le circuit de traitement de gaz comprend un circuit d'alimentation en alumine configuré pour alimenter en alumine le premier étage 100 de traitement. Ainsi, le traitement du fluorure d'hydrogène présent dans les gaz de cuve est réalisé par adsorption du fluor sur cette alumine.

Le circuit d'alimentation est en outre configuré pour alimenter en alumine le deuxième étage 102 de traitement et cette deuxième usine 1000 d'électrolyse comprend un échangeur 142 de chaleur placé entre le premier étage 100 de traitement et le deuxième étage 102 de traitement.

Comme cela a été décrit plus en détail ci-dessus, le fait de placer un échangeur thermique à l'aval du premier étage 100 de traitement et à l'amont du deuxième étage 102 de traitement améliore sensiblement les performances de traitement des gaz de cuve et le rendement énergétique de ce traitement.

La deuxième usine 1000 d'électrolyse peut par ailleurs comprendre tout ou partie des caractéristiques et avantages de l'usine 1 d'électrolyse décrite précédemment.

Ainsi, le premier étage 100 de traitement peut comprendre une pluralité de réacteurs 104 en parallèle. Chaque réacteur 104 est associé à un groupe de cuves 2 d'électrolyse, c'est-à-dire à une ou plusieurs cuves 2 d'électrolyse de la série.

Chaque réacteur 104 est associé à un groupe distinct de cuves 2 d'électrolyse. Autrement dit, chaque groupe de cuves 2 d'électrolyse fonctionne en relation avec un réacteur 104 distinct parmi les réacteurs 104.

Comme illustré sur la figure 1 ou sur la figure 3, chaque réacteur 104 du premier étage 100 de traitement comprend :
- une première entrée 106 reliée au groupe de cuves 2 d'électrolyse associé, en vue de collecter les gaz de cuve générés par ledit groupe de cuves 2 d'électrolyse,
- une deuxième entrée 108 reliée au circuit d'alimentation en alumine pour alimenter chaque réacteur 104 en alumine, en vue de fixer par adsorption du fluorure d'hydrogène présent dans les gaz de cuve sur ladite alumine, et
- une première sortie 110 pour conduire les gaz de cuve traités dans le premier étage 100 de traitement vers le deuxième étage 102 de traitement, comme illustré par la flèche 20.

Les réacteurs 104 sont agencés en parallèle les uns par rapport aux autres. Ainsi, chaque réacteur 104 traite une partie seulement des gaz de cuve générés par la série de cuves 2 d'électrolyse. Plus particulièrement, chaque réacteur 104 traite exclusivement les gaz de cuve du groupe de cuves 2 d'électrolyse auquel ce réacteur 104 est associé et chaque réacteur 104 peut par conséquent être disposé proche du groupe de cuves 2 d'électrolyse associé.

L'utilisation d'un premier étage 100 de traitement comprenant une pluralité de réacteurs 104 en parallèle associés à des groupes distincts de cuves 2 d'électrolyse suivi d'un deuxième étage 102 de traitement permet d'atteindre des concentrations en fluorure d'hydrogène de l'ordre d'environ [0.5-1.0] mg/Nm³ et en dioxyde de soufre inférieure à 400mg/Nm³ en sortie du circuit de traitement de gaz.

Le circuit de traitement de gaz peut comprendre, en sortie, une cheminée 105 d'évacuation.

Chaque réacteur 104 est avantageusement configuré pour préchauffer de l'alumine destinée à alimenter le groupe de cuves 2 d'électrolyse auquel chaque réacteur 104 est associé.

Ce préchauffage est réalisé au sein de chaque réacteur 104 par transfert thermique entre les gaz de cuve circulant dans chaque réacteur 104 et l'alumine destinée à alimenter le groupe de cuves 2 d'électrolyse auquel chaque réacteur 104 est associé.

Chaque réacteur 104 comprend en outre une deuxième sortie 112 pour alimenter le groupe de cuves 2 d'électrolyse avec l'alumine préchauffée au sein du réacteur 104 par les gaz de cuve, comme cela est représenté par la flèche 22 de la figure 1.

Les réacteurs 104 permettent ainsi de préchauffer l'alumine jusqu'à la température des gaz de cuve, c'est-à-dire notamment jusqu'à 200°C voire 300 - 400°C lorsque les cuves d'électrolyse utilisées sont des cuves d'électrolyse de type récent.

Cela réduit la consommation d'énergie des cuves 2 d'électrolyse, car l'énergie apportée par ce préchauffage de l'alumine alimentant les cuves 2 d'électrolyse n'est pas prélevée dans les cuves 2 d'électrolyse elles-mêmes, contrairement à l'état de la technique, mais dans les gaz de cuve circulant dans le circuit de traitement des gaz de cuve. Par exemple, la consommation spécifique des cuves 2 d'électrolyse peut ainsi être réduite d'environ 100kWh/tAl (100 kWh par tonne d'aluminium produite). Le préchauffage de l'alumine par les gaz de cuve permet une valorisation maximale de l'énergie normalement dissipée dans l'état de la technique.

Ce préchauffage permet aussi de « sécher » l'alumine, c'est-à-dire d'éliminer une partie de l'eau contenue dans l'alumine, ce qui permet de baisser les émissions de fluorure d'hydrogène à la cuve, l'eau contenue dans l'alumine étant une source importante des émissions de fluorure d'hydrogène au contact du bain d'électrolyse.

Plus particulièrement, chaque réacteur 104 comprend une enceinte 114, visible sur la figure 3, délimitant un volume dans lequel circulent à la fois les gaz de cuve provenant du groupe de cuves 2 associé à chaque réacteur 104 et l'alumine destinée à alimenter ce groupe de cuves 2 d'électrolyse. L'enceinte 114 est configurée pour permettre un transfert thermique par contact direct entre les gaz de cuve et l'alumine destinée à alimenter le groupe de cuves 2 d'électrolyse correspondant.

Ainsi, le fluorure d'hydrogène contenu dans les gaz de cuve est traité au moyen de l'alumine qui est destinée à alimenter les cuves d'électrolyse, et en même temps a lieu le transfert thermique permettant le préchauffage. L'alumine alimentant chaque groupe de cuves d'électrolyse est donc aussi l'alumine fluorée résultant de l'adsorption du fluorure d'hydrogène sur l'alumine au sein du réacteur associé à ce groupe de cuves d'électrolyse.

Le fluor dégagé sous forme de fluorure d'hydrogène gazeux par chaque groupe de cuves 2 d'électrolyse est renvoyé vers ce même groupe de cuves 2 d'électrolyse sous forme d'alumine fluorée, ce qui permet de mieux contrôler la quantité de fluor présente dans le bain d'électrolyse.

Pour optimiser le rendement du préchauffage, les réacteurs 104 sont positionnés à proximité du groupe de cuves 2 d'électrolyse auquel chaque réacteur 104 est associé. Plus précisément, les réacteurs 104 sont positionnés en sortie de la ou des cuves 2 d'électrolyse du groupe de cuves 2 d'électrolyse auquel chaque réacteur 104 est associé.

Chaque réacteur 104 est avantageusement situé à moins de 40 mètres, notamment à moins de 20 mètres, et de préférence à moins de 10 mètres, de chaque cuve 2 d'électrolyse du groupe de cuves 2 d'électrolyse auquel chaque réacteur 104 est associé.

Plus le réacteur 104 à l'intérieur duquel s'opère le transfert thermique est proche des cuves 2 d'électrolyse auquel ce réacteur 104 est associé, moins les gaz de cuve et l'alumine préchauffée ont le temps de refroidir entre les cuves 2 et le réacteur 104 (pour les gaz de cuve) et entre le réacteur 104 et les cuves 2 d'électrolyse (pour l'alumine fluorée). Le rendement est ainsi amélioré.

Avantageusement, les conduits permettant le transport de l'alumine depuis le réacteur jusqu'aux cuves d'électrolyse sont calorifugés, notamment en entourant les conduits avec un isolant thermique. Ces conduits ne comportent avantageusement pas de trémie ou autre équipement de stockage.

Avantageusement, chaque réacteur 104 est configuré pour séparer les gaz de cuve, les particules solides transportées par ces gaz de cuve, et l'alumine fluorée issue de l'adsorption du fluor sur l'alumine injectée dans le réacteur via la deuxième entrée 108.

En particulier, les réacteurs 104 sont adaptés pour séparer les gaz de cuve épurés en fluorure d'hydrogène de l'alumine et des poussières avec un rendement élevé et typiquement supérieur à 90%, pour éviter notamment les risques de dépôts.

Les réacteurs 104 peuvent comprendre à cette fin des filtres à manches pour filtrer les poussières.

Les réacteurs 104 peuvent être des réacteurs standards de type Venturi.

De préférence, les réacteurs 104 sont des réacteurs cycloniques, comme illustré sur la figure 3. Cela offre une filtration efficace, tout en disposant de réacteurs 104 compacts, ce qui permet d'une part de placer les réacteurs 104 au plus près des cuves 2 d'électrolyse pour améliorer le préchauffage et d'autre part de réduire l'encombrement dans la deuxième usine 1000 d'électrolyse.

La flèche 24 montre l'entrée d'alumine (de préférence désulfurée comme cela sera décrit ci-après) à l'intérieur du réacteur 104 via la deuxième entrée 108. L'alumine est dispersée par un ensemble de buses 116 de manière à former une pluie de particules.

La flèche 26 montre l'entrée, via la première entrée 106, des gaz de cuve générés par le groupe de cuves 2 d'électrolyse associé à chaque réacteur 104.

La flèche 20 montre l'évacuation des gaz de cuve épurés en fluorure d'hydrogène, via la première sortie 110, et conduits en direction du deuxième étage 102 de traitement.

La première entrée 108 est ici placée à une hauteur inférieure à celle de la première sortie 110. Ainsi, à l'intérieur de l'enceinte 114 des réacteurs 104, les gaz de cuve circulent de façon ascendante, à contre-courant de l'alumine tombant par gravité vers la deuxième sortie 112 depuis l'ensemble de buses 116 placées en haut des réacteurs 104.

L'enceinte 114 est conformée pour générer un cyclone séparant les poussières des gaz de cuve. L'enceinte 114 comprend une paroi 118 en entonnoir conduisant à la deuxième sortie 112.

Au niveau de la deuxième sortie 112, la flèche 28 montre la sortie de l'alumine fluorée et des poussières. L'alumine fluorée est ensuite injectée dans les cuves 2 d'électrolyse associées pour alimenter la réaction d'électrolyse.

On notera que chaque groupe de cuves 2 d'électrolyse comprend au maximum quatre, de préférence au maximum trois, cuves 2 d'électrolyse de la série de cuves d'électrolyse. Le premier étage 100 de traitement comprend donc un réacteur 104 pour au maximum quatre ou trois cuves 2 d'électrolyse.

Cela assure un compromis avantageux entre un nombre minimal de réacteurs 104 afin de réduire les coûts, et un traitement efficace et un emplacement proche des cuves d'électrolyse de chaque réacteur pour réduire la consommation des cuves d'électrolyse.

Dans le cas où chaque groupe de cuves 2 d'électrolyse comprend plusieurs cuves 2 d'électrolyse, et pour permettre le positionnement des réacteurs 104 au plus proche des cuves 2 d'électrolyse auquel ces réacteurs 104 sont associés, les cuves 2 d'électrolyse de chaque groupe de cuves 2 d'électrolyse sont des cuves d'électrolyse adjacentes de la série de cuves 2 d'électrolyse.

Selon un mode de réalisation préféré, chaque groupe de cuves 2 d'électrolyse comprend une unique cuve 2 d'électrolyse. Autrement dit, a deuxième usine 1000 d'électrolyse comprend autant de réacteurs 104 que de cuves 2 d'électrolyse, et à chaque réacteur 104 est associée une cuve 2 d'électrolyse distincte.

Cela permet le recyclage individuel du fluor émis par chaque cuve 2 d'électrolyse, ce qui permet un fonctionnement optimisé de chaque cuve 2 d'électrolyse.

Comme illustré par la figure 1, le circuit de traitement de gaz comprend un circuit d'alimentation en alumine configuré pour alimenter en alumine le deuxième étage 102 de traitement. Ainsi, le dioxyde de soufre présent dans les gaz de cuve est traité par adsorption du dioxyde de soufre sur cette alumine.

A cette fin, le deuxième étage 102 de traitement comprend un réacteur 120 configuré pour fixer par adsorption le dioxyde de soufre sur de l'alumine provenant de ce circuit d'alimentation en alumine.

Le deuxième étage 102 de traitement, et plus précisément le réacteur 120, comprend une première entrée 122 reliée au premier étage 100 de traitement pour l'admission des gaz de cuve préalablement traités par le premier étage 100 de traitement dans le deuxième étage 102 de traitement, une deuxième entrée 124 reliée au circuit d'alimentation en alumine pour alimenter le deuxième étage 102 de traitement en alumine, afin de fixer par adsorption du dioxyde de soufre sur ladite alumine, une première sortie 126 pour évacuer les gaz de cuve traités dans le deuxième étage 102 de traitement, c'est-à-dire des gaz de cuve épurés en fluorure d'hydrogène et dioxyde de soufre, et une deuxième sortie 128 pour évacuer l'alumine sulfurée issue de l'adsorption du dioxyde de soufre sur l'alumine injectée dans le deuxième étage 102 de traitement.

Le deuxième 102 étage de traitement est consécutif au premier étage 100 de traitement, c'est-à-dire placé à l'aval du premier étage 100 de traitement. Les gaz de cuve transitent nécessairement par les réacteurs 104 du premier étage 100 de traitement avant de parvenir au deuxième étage 102 de traitement.

Le premier étage 100 de traitement a permis, du fait de sa pluralité de réacteurs 104 en parallèle, d'abaisser la concentration en fluorure d'hydrogène dans les gaz de façon suffisante pour que l'adsorption du dioxyde de soufre sur l'alumine permette un traitement efficace du dioxyde de soufre dans le deuxième étage 102 de traitement. En effet, l'adsorption préférentielle du fluorure d'hydrogène sur l'alumine par rapport à l'adsorption du dioxyde de soufre sur l'alumine rend un traitement du dioxyde de soufre non efficace si la concentration en fluorure d'hydrogène est trop importante.

Le réacteur 120 peut être avantageusement configuré pour séparer l'alumine sulfurée, issue de l'adsorption du dioxyde de soufre sur l'alumine fraîche, des gaz de cuve débarrassés du dioxyde de soufre. A cette fin, le réacteur du deuxième étage 102 de traitement peut être un réacteur cyclonique, comme le réacteur 104 de la figure 3.

De préférence, le deuxième étage 102 de traitement comprend un unique réacteur 120, ou une pluralité de réacteurs 120 disposés côte à côte, ce qui offre un avantage en termes de compacité.

La flèche 24 montre l'entrée d'alumine à l'intérieur du réacteur 120 via la deuxième entrée 124. L'alumine est dispersée par un ensemble de buses 130 de manière à former une pluie de particules.

La flèche 26 montre l'entrée, via la première entrée 122, des gaz de cuve ayant préalablement été traités par le premier étage 100 de traitement.

La flèche 20 montre l'évacuation des gaz de cuve épurés en dioxyde de soufre et fluorure d'hydrogène, via la première sortie 126.

La première entrée 122 est placée à une hauteur inférieure à celle de la première sortie 126. Ainsi, à l'intérieur d'une enceinte 132 du réacteur 120, les gaz de cuve circulent de façon ascendante, à contre-courant de l'alumine tombant par gravité vers la deuxième sortie 128 depuis l'ensemble de buses 130 placées en haut du réacteur 120.

L'enceinte 132 est conformée pour générer un cyclone séparant l'alumine sulfurée des gaz de cuve. L'enceinte 132 comprend une paroi 134 en entonnoir conduisant à la deuxième sortie 128.

Au niveau de la deuxième sortie 128, la flèche 28 montre la sortie de l'alumine sulfurée résultant de l'adsorption du dioxyde de soufre sur l'alumine injectée dans le deuxième étage 102 de traitement.

La deuxième usine 1000 d'électrolyse comprend, selon un mode de réalisation préféré, un dispositif 136 de désorption. Le dispositif 136 de désorption est configuré pour permettre la désorption de soufre fixé sur l'alumine sulfurée sortant du deuxième étage 102 de traitement.

Le dispositif 136 de désorption comprend une entrée 138 reliée au deuxième étage 102 de traitement de manière à collecter l'alumine sulfurée résultant du traitement du dioxyde de soufre dans le deuxième étage 102 de traitement par adsorption du dioxyde de soufre sur l'alumine, et une sortie 140 reliée à la deuxième entrée 108 des réacteurs 104 du premier étage 100 de traitement.

Ainsi, l'alumine alimentant les réacteurs 104 du premier étage de traitement est l'alumine désulfurée issue du dispositif 136 de désorption.

Le dispositif 136 de désorption est adapté pour désorber au moins 80% du dioxyde de soufre adsorbé par l'alumine dans le deuxième étage 102 de traitement.

Le dispositif 136 de désorption est configuré pour que seul le dioxyde de soufre soit désorbé, mais pas le fluor résiduel adsorbé dans le deuxième étage 102 de traitement.

De préférence quand la deuxième usine 1000 d'électrolyse comprend des cuves 2 d'électrolyse de type récent et donc que la température à l'intérieur des réacteurs 104 est élevée, le circuit de traitement de gaz peut en outre comprendre un dispositif 121 d'humidification, agencé entre le dispositif 136 de désorption et les réacteurs 104, pour humidifier l'alumine désulfurée sortant du dispositif 136 de désorption avant entrée de cette alumine dans les réacteurs 104 du premier étage 100 de traitement.

Le circuit de circulation d'alumine de la deuxième usine 1000 d'électrolyse sert à la fois à traiter les gaz de cuve et alimenter les cuves 2 d'électrolyse en alumine. Ce circuit d'alimentation en alumine comprend :
- un moyen de stockage optionnel de l'alumine fraîche, comme une trémie 139, conduisant à la deuxième entrée 124 du deuxième étage 102 de traitement,
- le deuxième étage 102 de traitement,
- le dispositif 136 de désorption,
- éventuellement, un dispositif 121 d'humidification pour humidifier l'alumine désulfurée sortant du dispositif 136 de désorption
- les réacteurs 104 du premier étage de traitement,
- les cuves 2 d'électrolyse.

Comme illustré sur la figure 1, l'alumine fraîche est d'abord injectée dans le deuxième étage 102 de traitement, où elle est utilisée pour l'adsorption de dioxyde de soufre. L'alumine sulfurée sortant du deuxième étage 102 de traitement est conduite ensuite jusqu'au dispositif 136 de désorption. L'alumine désulfurée sortant du dispositif 136 de désorption peut être humidifiée, puis est répartie dans les réacteurs 104 du premier étage 100 de traitement, où cette alumine adsorbe le fluor des gaz de cuve tout en se réchauffant sensiblement au contact de ces gaz de cuve. L'alumine fluorée et préchauffée sortant des réacteurs 104 est enfin conduite jusqu'au groupe de cuve(s) 2 d'électrolyse auquel chaque réacteur 104 est associé, en vue d'alimenter la réaction d'électrolyse.

L'échangeur 142 de chaleur est de préférence adapté pour abaisser la température des gaz de cuve d'une température de 400°C en entrée de l'échangeur de chaleur à une température inférieure ou égale à 100°C et de préférence inférieure ou égale à 70°C en sortie de l'échangeur de chaleur.

De préférence, la deuxième usine 1000 d'électrolyse comprend un unique échangeur 142 de chaleur, pour améliorer la compacité.

L'échangeur 142 de chaleur peut avantageusement inclure un circuit de circulation de fluide caloporteur. Ce circuit de circulation de fluide caloporteur est configuré pour diminuer la température des gaz de cuve sortant des réacteurs 104 du premier étage 100 de traitement par échauffement du fluide caloporteur circulant dans ce circuit de circulation de fluide caloporteur. La chaleur des gaz de cuve est transférée au fluide caloporteur. De plus, le circuit de circulation de fluide caloporteur est configuré pour transférer la chaleur du fluide caloporteur préalablement échauffé par les gaz de cuve à un fluide de désorption, ce fluide de désorption étant destiné à être injecté dans le dispositif 136 de désorption, via une deuxième entrée 143 du dispositif 136 de désorption, pour réaliser la désorption.

Cela permet d'améliorer le rendement de la désorption tout en valorisant l'énergie thermique des gaz de cuve, ce qui améliore donc aussi le rendement énergétique.

Le fluide caloporteur est par exemple de l'eau.

La séparation par désorption peut avantageusement être réalisée par contact direct entre l'alumine sulfurée et le fluide de désorption.

De préférence, le fluide de désorption est de la vapeur d'eau. Ainsi, l'étape de désorption se réalise en exposant l'alumine sulfurée à de la vapeur d'eau surchauffée, c'est-à-dire de la vapeur d'eau à température supérieure ou égale à 120°C.

La flèche 30 de la figure 1 représente l'entrée du fluide de désorption froid dans l'échangeur 142 de chaleur. La flèche 32 représente le fluide de désorption, par exemple la vapeur d'eau surchauffée, ayant été échauffé par le fluide caloporteur qui a lui-même été échauffé par les gaz de cuve circulant dans l'échangeur 142 de chaleur. Comme représenté par la flèche 32, le fluide de désorption circule vers le dispositif 136 de désorption.

Alternativement, le fluide de désorption destiné à être injecté dans le dispositif 136 de désorption peut être un gaz chaud ou un mélange de gaz chaud, par exemple de l'azote. On notera que par gaz chaud on entend gaz dont la température est au moins égale à 350°, de préférence au moins égale à 400°. La température du gaz chaud est en fait adaptée pour provoquer la désorption du dioxyde de soufre. Cette température est supérieure à la température de désorption du dioxyde de soufre, c'est-à-dire supérieure à 200°C ; cette température est par exemple comprise dans l'intervalle [400-700]°C, voire [400-1000]°C.

La deuxième usine 1000 d'électrolyse peut comprendre une unité 144 de traitement configurée pour traiter le fluide de désorption ayant servi à désorber le dioxyde de soufre présent sur l'alumine sulfurée. A cet effet, le dispositif 136 de désorption comprend une sortie 146 conduisant le ou les sous-produits de la désorption jusqu'à l'unité 144 de traitement. Par exemple, dans le cas de vapeur d'eau, l'unité 144 de traitement est avantageusement un dispositif de collecte d'acide sulfurique, permettant de collecter l'acide sulfurique résultant de la désorption au moyen de vapeur d'eau, en vue de valoriser cet acide sulfurique.

Le circuit de traitement des gaz comprend avantageusement un dispositif 148 d'humidification en amont du deuxième étage 102 de traitement, en vue d'améliorer le rendement du traitement du dioxyde de soufre dans le deuxième étage 102 de traitement.

Comme illustré sur la figure 1, le circuit de traitement des gaz comprend de préférence un troisième étage 150 de traitement. Le troisième étage 150 de traitement est configuré pour traiter le dioxyde de carbone présent dans les gaz de cuve.

Le troisième étage 150 de traitement comprend une entrée 152 connectée à la première sortie 126 du deuxième étage 102 de traitement pour recevoir les gaz de cuve ayant été préalablement traités par le deuxième étage 102 de traitement, et une sortie 154 pour évacuer les gaz de cuve épurés en dioxyde de carbone, dioxyde de soufre et fluorure d'hydrogène vers la cheminée 105 d'évacuation.

Le troisième étage 150 de traitement comprend par exemple une tour à absorption.

L'invention concerne aussi un deuxième procédé de traitement des gaz de cuve émis par les cuves 2 d'électrolyse d'une série de cuves d'électrolyse dans une usine 1000 d'électrolyse, notamment la deuxième usine 1000 d'électrolyse décrite ci-dessus. Ainsi, les mêmes éléments sont désignés ci-après par les mêmes références numériques.

A l'instar du procédé décrit précédemment, ce deuxième procédé comprend les étapes :
- traiter du fluorure d'hydrogène présent dans les gaz de cuve dans un premier étage 100 de traitement, et
- traiter du dioxyde de soufre présent dans les gaz de cuve dans un deuxième étage 102 de traitement.

Le deuxième procédé est caractérisé par le fait que ce deuxième procédé comprend l'étape : refroidir les gaz de cuve avec un échangeur de chaleur après traitement des gaz de cuve dans le premier étage de traitement et avant traitement des gaz de cuve dans le deuxième étage de traitement.

Cette étape de refroidissement peut être réalisée au moyen de l'échangeur 142 de chaleur.

Ce deuxième procédé peut par ailleurs comprendre tout ou partie des caractéristiques et avantages du procédé précédemment décrit.

Ainsi, l'étape traiter du fluorure d'hydrogène présent dans les gaz de cuve dans un premier étage 100 de traitement peut avantageusement comprendre le traitement du fluorure d'hydrogène en parallèle dans une pluralité de réacteurs 104, chaque réacteur étant associé à un groupe de cuves 2 d'électrolyse de la série de cuves d'électrolyse, chaque groupe de cuves 2 d'électrolyse comprenant une ou plusieurs cuves 2 d'électrolyse de la série de cuves d'électrolyse.

Chaque réacteur 104 est associé à un groupe de cuves 2 d'électrolyse, c'est-à-dire à au moins une cuve 2 d'électrolyse de la série.

Chaque réacteur 104 est associé à un groupe distinct de cuves 2 d'électrolyse. Autrement dit, chaque groupe de cuves 2 d'électrolyse fonctionne en relation avec un réacteur 104 distinct parmi les réacteurs 104.

Le deuxième procédé peut en outre comprendre l'étape : préchauffer de l'alumine destinée à alimenter les cuves 2 d'électrolyse de chaque groupe de cuves 2 d'électrolyse par transfert thermique entre cette alumine et les gaz de cuve collectés par le réacteur 104 associé au groupe de cuves 2 d'électrolyse correspondant.

Ce préchauffage permet de réduire la consommation spécifique d'énergie des cuves d'électrolyse, et aussi de « sécher » l'alumine, ce qui permet de baisser les émissions de fluorure d'hydrogène à la cuve, comme expliqué précédemment.

Le préchauffage peut être effectué à l'intérieur de chacun des réacteurs 104 du premier étage 100 de traitement.

On notera que le transfert thermique est réalisé de préférence par contact direct entre l'alumine destinée à alimenter les cuves 2 d'électrolyse et les gaz de cuve circulant au sein des réacteurs 104.

Ainsi, l'alumine destinée à alimenter les cuves 2 d'électrolyse est injectée dans les réacteurs 104 du premier étage 100 de traitement, où cette alumine adsorbe le fluor contenu dans les gaz de cuve.

Le deuxième procédé comprend avantageusement, dans chaque réacteur 104 du premier étage de traitement, l'étape : séparer les gaz de cuve, les particules solides transportées par ces gaz de cuve, et l'alumine fluorée issue de l'adsorption du fluor sur l'alumine injectée dans chaque réacteur 104.

Selon un mode de réalisation préféré, l'étape de traitement du fluorure d'hydrogène présent dans les gaz de cuve dans un premier étage 100 de traitement comprend le traitement du fluorure d'hydrogène par l'intermédiaire d'un réacteur 104 par cuve 2 d'électrolyse.

Le deuxième procédé comprend ainsi un traitement individualisé des cuves 2 d'électrolyse. Autrement dit, chaque groupe de cuves 2 d'électrolyse comprend une unique cuve 2 d'électrolyse ; il y a un réacteur 104 du premier étage 100 de traitement par cuve 2 d'électrolyse.

Le deuxième procédé peut comprendre l'étape : alimenter les cuves 2 d'électrolyse exclusivement avec l'alumine fluorée résultant de l'adsorption de fluorure d'hydrogène sur l'alumine.

Selon un mode de réalisation préféré, le deuxième procédé comprend :
- fixer du dioxyde de soufre sur de l'alumine par adsorption dans un réacteur 120 du deuxième étage 102 de traitement, de manière à obtenir des gaz de cuve épurés en dioxyde de soufre d'une part et de l'alumine sulfurée d'autre part,
- séparer par désorption le dioxyde de soufre présent sur l'alumine sulfurée dans un dispositif 136 de désorption, de manière à obtenir de l'alumine désulfurée,
- injecter l'alumine désulfurée dans les réacteurs 104 du premier étage 100 de traitement en vue d'adsorber le fluor présent dans les gaz de cuve et obtenir de l'alumine fluorée,
- acheminer l'alumine fluorée depuis les réacteurs 104 du premier étage 100 de traitement jusqu'aux cuves 2 d'électrolyse afin d'alimenter en alumine la réaction d'électrolyse.

L'étape de refroidissement des gaz de cuve peut être réalisée par transfert thermique entre les gaz de cuve et un fluide caloporteur, en vue d'obtenir un échauffement du fluide caloporteur, le procédé comprenant en outre l'étape transférer la chaleur du fluide caloporteur ainsi échauffé à un fluide de désorption destiné à être injecté dans le dispositif 136 de désorption pour séparer par désorption le soufre présent sur l'alumine sulfurée.

Ainsi, l'énergie nécessaire à la désorption est fournie par l'échangeur 142 de chaleur, ce qui permet d'améliorer le rendement énergétique.

La séparation par désorption peut avantageusement être réalisée par contact direct entre l'alumine sulfurée et le fluide de désorption.

Le fluide de désorption est préférentiellement de la vapeur d'eau.

Le deuxième procédé peut comprendre l'étape : humidifier les gaz de cuve avant l'étape de traitement du dioxyde de soufre présent dans les gaz de cuve dans le deuxième étage 102 de traitement, notamment par l'intermédiaire d'un dispositif 148 d'humidification positionné entre le premier étage 100 de traitement et le deuxième étage 102 de traitement en aval de l'échangeur 142 de chaleur.

Le deuxième procédé peut comprendre l'étape : humidifier l'alumine désulfurée destinée à alimenter les réacteurs 104 du premier étage 100 de traitement. Cette étape d'humidification peut être réalisée au moyen d'un dispositif 121 d'humidification positionné entre le dispositif 136 de désorption, en aval de celui-ci, et les réacteurs 104 du premier étage 100 de traitement.

De manière avantageuse, le deuxième procédé comprend l'étape : capturer du dioxyde de carbone présent dans les gaz de cuve, notamment dans un troisième étage 150 de traitement pouvant comprendre une tour à absorption.

Le deuxième procédé peut en outre comprendre toute autre étape mentionnée dans la description détaillée ci-dessus de la deuxième usine 1000 d'électrolyse.

Bien entendu, l'invention n'est nullement limitée au mode de réalisation décrit ci-dessus, ce mode de réalisation n'ayant été donné qu'à titre d'exemple. Des modifications restent possibles, notamment du point de vue de la constitution des divers éléments ou par la substitution d'équivalents techniques, sans sortir pour autant du domaine de protection de l'invention.

## Revendications

1. Usine (1000) d'électrolyse destinée à la production d'aluminium par électrolyse, l'usine (1000) d'électrolyse comprenant une série de cuves (2) d'électrolyse et un circuit de traitement de gaz destiné à traiter des gaz de cuve générés par la série de cuves (2) d'électrolyse au cours de la réaction d'électrolyse,
le circuit de traitement de gaz comprenant un premier étage (100) de traitement configuré pour traiter du fluorure d'hydrogène présent dans les gaz de cuve, un deuxième étage (102) de traitement configuré pour traiter du dioxyde de soufre présent dans les gaz de cuve et un circuit d'alimentation en alumine configuré pour alimenter en alumine le premier étage (100) de traitement et le deuxième étage de traitement,
l'usine (1000) d'électrolyse étant **caractérisée en ce que**
le circuit de traitement de gaz comprend un échangeur de chaleur (142) placé entre le premier étage de traitement et le deuxième étage de traitement pour refroidir les gaz de cuve après traitement des gaz de cuve dans le premier étage de traitement et avant traitement des gaz de cuve dans le deuxième étage de traitement.

2. Usine (1000) d'électrolyse selon la revendication 1, dans laquelle le deuxième étage (102) de traitement comprend un réacteur (120) configuré pour fixer par adsorption le dioxyde de soufre sur de l'alumine provenant de ce circuit d'alimentation en alumine.

3. Usine (1000) d'électrolyse selon l'une des revendications 1 ou 2, dans laquelle le premier étage (100) de traitement comprend un réacteur (104) configuré pour fixer par adsorption le fluorure d'hydrogène sur de l'alumine provenant de ce circuit d'alimentation en alumine.

4. Usine (1000) d'électrolyse selon l'une des revendications 1 à 3, dans laquelle le premier étage (100) de traitement comprend une pluralité de réacteurs (104), chaque réacteur (104) étant associé à un groupe de cuves (2) d'électrolyse, chaque groupe de cuves (2) d'électrolyse comprenant une ou plusieurs cuves (2) d'électrolyse de la série de cuves (2) d'électrolyse, et chaque réacteur (104) comprenant :
- une première entrée (106) reliée au groupe de cuves (2) d'électrolyse associé, en vue de collecter les gaz de cuve générés par ledit groupe de cuves (2) d'électrolyse,
- une deuxième entrée (108) reliée au circuit d'alimentation en alumine pour alimenter chaque réacteur (104) en alumine, en vue de fixer par adsorption du fluorure d'hydrogène présent dans les gaz de cuve sur ladite alumine, et
- une première sortie (110) pour conduire les gaz de cuve traités dans le premier étage (100) de traitement vers le deuxième étage (102) de traitement.

5. Usine (1000) d'électrolyse selon la revendication 4, dans laquelle chaque réacteur (104) est configuré pour préchauffer de l'alumine destinée à alimenter le groupe de cuves (2) d'électrolyse auquel ce réacteur (104) est associé, par transfert thermique entre les gaz de cuve circulant dans ce réacteur (104) et ladite alumine et chaque réacteur (104) comprend une deuxième sortie (112) pour alimenter le groupe de cuves (2) d'électrolyse avec l'alumine préchauffée au sein du réacteur (104) par les gaz de cuve.

6. Usine (1000) d'électrolyse selon la revendication 5, dans laquelle chaque réacteur (104) comprend une enceinte (114) délimitant un volume dans lequel circulent à la fois les gaz de cuve provenant du groupe de cuves (2) d'électrolyse associé et l'alumine destinée à alimenter ce groupe de cuves (2) d'électrolyse, l'enceinte (114) étant configurée pour permettre un transfert thermique par contact direct entre les gaz de cuve et l'alumine destinée à alimenter le groupe de cuves (2) d'électrolyse associé.

7. Usine (1000) d'électrolyse selon l'une des revendications 4 à 6, dans laquelle chaque réacteur (104) du premier étage (100) de traitement est configuré pour séparer les gaz de cuve, les particules solides transportées par ces gaz de cuve, et l'alumine fluorée issue de l'adsorption du fluor sur l'alumine injectée dans le réacteur (104) via la deuxième entrée (108).

8. Usine (1000) d'électrolyse selon l'une des revendications 4 à 7, dans laquelle l'usine (1000) d'électrolyse comprend un dispositif (136) de désorption configuré pour permettre la désorption du dioxyde de soufre fixé sur l'alumine, le dispositif (136) de désorption comprenant une entrée (138) reliée au deuxième étage (102) de traitement de manière à collecter l'alumine sulfurée résultant du traitement du dioxyde de soufre dans le deuxième étage (102) de traitement par adsorption du dioxyde de soufre sur l'alumine, et une sortie (140) reliée à la deuxième entrée (108) des réacteurs (104) du premier étage (100) de traitement, de sorte que l'alumine alimentant les réacteurs (104) du premier étage (100) de traitement est l'alumine désulfurée issue du dispositif (136) de désorption.

9. Usine (1000) d'électrolyse selon la revendication 8, dans laquelle l'échangeur (142) de chaleur comprend un circuit de circulation de fluide caloporteur configuré pour diminuer la température des gaz de cuve sortant des réacteurs (104) du premier étage (100) de traitement par échauffement du fluide caloporteur circulant dans ce circuit de circulation de fluide caloporteur, et le circuit de circulation de fluide caloporteur est configuré pour transférer la chaleur du fluide caloporteur échauffé à un fluide de désorption destiné à être injecté dans le dispositif (136) de désorption.

10. Usine (1000) d'électrolyse selon l'une des revendications 1 à 9, dans laquelle le circuit de traitement des gaz comprend un dispositif (148) d'humidification en amont du deuxième étage (102) de traitement.

11. Procédé de traitement des gaz de cuve émis par les cuves d'électrolyse d'une série de cuves d'électrolyse d'une usine (1000) d'électrolyse, notamment une usine (1000) d'électrolyse selon l'une des revendications 1 à 10, le procédé comprenant les étapes :
- traiter du fluorure d'hydrogène présent dans les gaz de cuve dans un premier étage (100) de traitement par adsorption sur de l'alumine,
- traiter du dioxyde de soufre présent dans les gaz de cuve dans un deuxième étage (102) de traitement par adsorption sur de l'alumine,
le procédé étant **caractérisé en ce qu'**il comprend une étape consistant à refroidir les gaz de cuve avec un échangeur de chaleur (142) après traitement des gaz de cuve dans le premier étage de traitement et avant traitement des gaz de cuve dans le deuxième étage de traitement.

12. Procédé selon la revendication 11, comprenant l'étape consistant à traiter du fluorure d'hydrogène présent dans les gaz de cuve dans un premier étage (100) de traitement comprend le traitement du fluorure d'hydrogène en parallèle dans une pluralité de réacteurs (104), chaque réacteur (104) étant associé à un groupe de cuves (2) d'électrolyse de la série de cuves (2) d'électrolyse, chaque groupe de cuves (2) d'électrolyse comprenant une ou plusieurs cuves (2) d'électrolyse de la série de cuves (2) d'électrolyse.

13. Procédé selon la revendication 12, dans lequel le procédé comprend l'étape : préchauffer de l'alumine destinée à alimenter les cuves (2) d'électrolyse de chaque groupe de cuves (2) d'électrolyse par transfert thermique entre ladite alumine et les gaz de cuve collectés par le réacteur (104) associé au groupe de cuves (2) d'électrolyse correspondant.

14. Procédé selon la revendication 13, dans lequel ledit transfert thermique est réalisé par contact direct entre ladite alumine et lesdits gaz de cuve.

15. Procédé selon l'une des revendications 11 à 14, dans lequel le procédé comprend :
- fixer du dioxyde de soufre sur de l'alumine par adsorption dans un réacteur (120) du deuxième étage (102) de traitement, de manière à obtenir des gaz de cuve épurés en dioxyde de soufre d'une part et de l'alumine sulfurée d'autre part,
- séparer par désorption le dioxyde de soufre présent sur l'alumine sulfurée dans un dispositif (136) de désorption, de manière à obtenir de l'alumine désulfurée,
- injecter l'alumine désulfurée dans les réacteurs (104) du premier étage (100) de traitement en vue d'adsorber le fluor présent dans les gaz de cuve et obtenir de l'alumine fluorée,
- acheminer l'alumine fluorée depuis les réacteurs (104) du premier étage (100) de traitement jusqu'aux cuves (2) d'électrolyse afin d'alimenter en alumine la réaction d'électrolyse.

## Patentansprüche

1. Elektrolyseanlage (1000) zur Gewinnung von Aluminium durch Elektrolyse, wobei die Elektrolyseanlage (1000) eine Reihe von Elektrolysezellen (2) und einen Gasbehandlungskreislauf zur Behandlung von Zellgasen umfasst, die durch die Reihe von Elektrolysezellen (2) während der Elektrolysereaktion erzeugt werden,
wobei der Gasbehandlungskreislauf eine erste Behandlungsstufe (100), ausgebildet zur Behandlung von in den Zellgasen vorhandenem Fluorwasserstoff, eine zweite Behandlungsstufe (102), ausgebildet zur Behandlung von in den Zellgasen vorhandenem Schwefeldioxid, und ein Aluminiumoxid-Zuführsystem umfasst, ausgebildet zur Zuführung von Aluminiumoxid zur ersten Behandlungsstufe (100) und zur zweiten Behandlungsstufe,
wobei die Elektrolyseanlage (1000) **dadurch gekennzeichnet ist, dass**
der Gasbehandlungskreislauf einen Wärmetauscher (142) umfasst, der zwischen der ersten Behandlungsstufe und der zweiten Behandlungsstufe angeordnet ist, um die Zellgase nach Behandlung der Zellgase in der ersten Behandlungsstufe und vor Behandlung der Zellgase in der zweiten Behandlungsstufe abzukühlen.

2. Elektrolyseanlage (1000) nach Anspruch 1, wobei die zweite Behandlungsstufe (102) einen Reaktor (120) umfasst, der dazu ausgebildet ist, Schwefeldioxid an aus diesem Aluminiumoxid-Zuführsystem kommendem Aluminiumoxid durch Adsorption anzulagern.

3. Elektrolyseanlage (1000) nach einem der Ansprüche 1 oder 2, wobei die erste Behandlungsstufe (100) einen Reaktor (104) umfasst, der dazu ausgebildet ist, Fluorwasserstoff an aus diesem Aluminiumoxid-Zuführsystem kommendem Aluminiumoxid durch Adsorption anzulagern.

4. Elektrolyseanlage (1000) nach einem der Ansprüche 1 bis 3, wobei die erste Behandlungsstufe (100) eine Vielzahl von Reaktoren (104) umfasst, wobei jeder Reaktor (104) einer Gruppe von Elektrolysezellen (2) zugeordnet ist, wobei jede Gruppe von Elektrolysezellen (2) eine oder mehrere Elektrolysezellen (2) der Reihe von Elektrolysezellen (2) umfasst, und wobei jeder Reaktor (104) umfasst:
- einen ersten Eingang (106), der mit der zugehörigen Gruppe von Elektrolysezellen (2) verbunden ist, zum Sammeln der von der Gruppe von Elektrolysezellen (2) erzeugten Zellgase,
- einen zweiten Eingang (108), der mit dem Aluminiumoxid-Zuführsystem zur Versorgung jedes Reaktors (104) mit Aluminiumoxid verbunden ist, zum Anlagern von in den Zellgasen vorhandenem Fluorwasserstoff an dem Aluminiumoxid durch Adsorption, und
- einen ersten Ausgang (110) zum Leiten der in der ersten Behandlungsstufe (100) behandelten Zellgase zur zweiten Behandlungsstufe (102).

5. Elektrolyseanlage (1000) nach Anspruch 4, wobei jeder Reaktor (104) dazu ausgebildet ist, Aluminiumoxid zur Versorgung der Gruppe von Elektrolysezellen (2), der dieser Reaktor (104) zugeordnet ist, durch Wärmeübertragung zwischen den in diesem Reaktor (104) strömenden Zellgasen und dem Aluminiumoxid vorzuwärmen, und jeder Reaktor (104) einen zweiten Ausgang (112) umfasst, um die Gruppe von Elektrolysezellen (2) mit dem im Reaktor (104) durch die Zellgase vorgewärmten Aluminiumoxid zu versorgen.

6. Elektrolyseanlage (1000) nach Anspruch 5, wobei jeder Reaktor (104) einen Behälter (114) umfasst, der ein Volumen begrenzt, in dem sowohl die Zellgase aus der zugehörigen Gruppe von Elektrolysezellen (2) als auch das Aluminiumoxid zur Versorgung dieser Gruppe von Elektrolysezellen (2) strömt, wobei der Behälter (114) dazu ausgebildet ist, eine Wärmeübertragung durch direkten Kontakt zwischen den Zellgasen und dem Aluminiumoxid zur Versorgung der zugehörigen Gruppe von Elektrolysezellen (2) zu ermöglichen.

7. Elektrolyseanlage (1000) nach einem der Ansprüche 4 bis 6, wobei jeder Reaktor (104) der ersten Behandlungsstufe (100) dazu ausgebildet ist, die Zellgase, die von diesen Zellgasen transportierten Feststoffpartikel und das fluorierte Aluminiumoxid, das aus der Adsorption von Fluor an dem in den Reaktor (104) über den zweiten Eingang (108) eingespritzten Aluminiumoxid resultiert, zu trennen.

8. Elektrolyseanlage (1000) nach einem der Ansprüche 4 bis 7, wobei die Elektrolyseanlage (1000) eine Desorptionsvorrichtung (136) umfasst, die dazu ausgebildet ist, die Desorption von an dem Aluminiumoxid angelagertem Schwefeldioxid zu ermöglichen, wobei die Desorptionsvorrichtung (136) einen mit der zweiten Behandlungsstufe (102) verbundenen Eingang (138) zum Sammeln von geschwefeltem Aluminiumoxid, das aus der Behandlung von Schwefeldioxid in der zweiten Behandlungsstufe (102) durch Adsorption von Schwefeldioxid an dem Aluminiumoxid resultiert, und einen mit dem zweiten Eingang (108) der Reaktoren (104) der ersten Behandlungsstufe (100) verbunden Ausgang (140) umfasst, so dass das den Reaktoren (104) der ersten Behandlungsstufe (100) zugeführte Aluminiumoxid das entschwefelte Aluminiumoxid aus der Desorptionsvorrichtung (136) ist.

9. Elektrolyseanlage (1000) nach Anspruch 8, wobei der Wärmetauscher (142) einen Wärmeträgerflüssigkeitskreislauf umfasst, der dazu ausgebildet ist, die Temperatur der aus den Reaktoren (104) der ersten Behandlungsstufe (100) austretenden Zellgase durch Erwärmen der in diesem Wärmeträgerflüssigkeitskreislauf strömenden Wärmeträgerflüssigkeit herabzusetzen, und wobei der Wärmeträgerflüssigkeitskreislauf dazu ausgebildet ist, die Wärme der erwärmten Wärmeträgerflüssigkeit an eine in die Desorptionsvorrichtung (136) einzuspritzende Desorptionsflüssigkeit zu übertragen.

10. Elektrolyseanlage (1000) nach einem der Ansprüche 1 bis 9, wobei der Gasbehandlungskreislauf eine Befeuchtungsvorrichtung (148) stromaufwärts der zweiten Behandlungsstufe (102) umfasst.

11. Verfahren zur Behandlung der von den Elektrolysezellen einer Reihe von Elektrolysezellen einer Elektrolyseanlage (1000), insbesondere einer Elektrolyseanlage (1000) nach einem der Ansprüche 1 bis 10, emittierten Zellgase, wobei das Verfahren die Schritte umfasst:
- Behandeln des in den Zellgasen vorhandenen Fluorwasserstoffs in einer ersten Behandlungsstufe (100) durch Adsorption an Aluminiumoxid,
- Behandeln des in den Zellgasen vorhandenen Schwefeldioxids in einer zweiten Behandlungsstufe (102) durch Adsorption an Aluminiumoxid,
wobei das Verfahren **dadurch gekennzeichnet ist, dass** es einen Schritt umfasst, bei dem die Zellgase mit einem Wärmetauscher (142) nach Behandlung der Zellgase in der ersten Behandlungsstufe und vor Behandlung der Zellgase in der zweiten Behandlungsstufe abgekühlt werden.

12. Verfahren nach Anspruch 11, umfassend den Schritt des Behandelns von in den Zellgasen vorhandenem Fluorwasserstoff in einer ersten Behandlungsstufe (100), umfassend das parallele Behandeln von Fluorwasserstoff in einer Vielzahl von Reaktoren (104), wobei jeder Reaktor (104) einer Gruppe von Elektrolysezellen (2) der Reihe von Elektrolysezellen (2) zugeordnet ist, wobei jede Gruppe von Elektrolysezellen (2) eine oder mehrere Elektrolysezellen (2) der Reihe von Elektrolysezellen (2) umfasst.

13. Verfahren nach Anspruch 12, wobei das Verfahren den Schritt umfasst: Vorwärmen von Aluminiumoxid zur Versorgung der Elektrolysezellen (2) jeder Gruppe von Elektrolysezellen (2) durch Wärmeübertragung zwischen dem Aluminiumoxid und den von dem der entsprechenden Gruppe von Elektrolysezellen (2) zugeordneten Reaktor (104) gesammelten Zellgase.

14. Verfahren nach Anspruch 13, wobei die Wärmeübertragung durch direkten Kontakt zwischen dem Aluminiumoxid und den Zellgasen erfolgt.

15. Verfahren nach einem der Ansprüche 11 bis 14, wobei das Verfahren umfasst:
- Anlagern von Schwefeldioxid an Aluminiumoxid durch Adsorption in einem Reaktor (120) der zweiten Behandlungsstufe (102), um von Schwefeldioxid gereinigte Zellgase einerseits und geschwefeltes Aluminiumoxid andererseits zu erhalten,
- Abtrennen des auf dem geschwefelten Aluminiumoxid vorhandenen Schwefeldioxids durch Desorption in einer Desorptionsvorrichtung (136), um entschwefeltes Aluminiumoxid zu erhalten,
- Einspritzen des entschwefelten Aluminiumoxids in die Reaktoren (104) der ersten Behandlungsstufe (100), um das in den Zellgasen vorhandene Fluor zu adsorbieren und fluoriertes Aluminiumoxid zu erhalten,
- Transportieren des fluorierten Aluminiumoxids von den Reaktoren (104) der ersten Behandlungsstufe (100) zu den Elektrolysezellen (2), um der Elektrolysereaktion Aluminiumoxid zuzuführen.

## Claims

1. Aluminum reduction plant (1000) for the production of aluminum by electrolysis, this aluminum reduction plant (1000) comprising a series of electrolytic cells (2) and a gas treatment circuit for treating pot gases generated by the series of electrolytic cells (2) during the electrolysis reaction,
the gas treatment circuit comprising a first treatment stage (100) configured to treat the hydrogen fluoride in the pot gases, a second treatment stage (102) configured to treat the sulfur dioxide in the pot gases and an alumina supply circuit configured to supply alumina to the first treatment stage (100) and the second treatment stage,
the aluminum reduction plant (1000) being **characterized in that**
the gas treatment circuit includes a heat exchanger (142) placed between the first treatment stage and the second treatment stage to cool the pot gases after treatment of the pot gases in the first treatment stage and before treatment of the pot gases in the second treatment stage.

2. Aluminum reduction plant (1000) according to claim 1, in which the second treatment stage (102) includes a reactor (120) configured to fix sulfur dioxide by adsorption onto alumina coming from the alumina feed circuit.

3. Aluminum reduction plant (1000) according to either of claims 1 or 2 , in which the first treatment stage (100) includes a reactor (104) configured to fix hydrogen fluoride by adsorption onto alumina coming from the alumina feed circuit.

4. Aluminum reduction plant (1000) according to any of claims 1 to 3, in which the first treatment stage (100) comprises a plurality of reactors (104), each reactor (104) being associated with a group of electrolytic cells (2), each group of electrolytic cells (2) comprising one or more electrolytic cells (2) from the series of electrolytic cells (2), and each reactor (104) comprising:
- a first inlet (106) connected to the related group of electrolytic cells (2) in order to collect the pot gases generated by said group of electrolytic cells (2),
- a second inlet (108) connected to the alumina supply circuit to supply each reactor (104) with alumina to fix the hydrogen fluoride in the pot gases by adsorption onto said alumina, and
- a first outlet (110) to route the pot gases treated in the first treatment stage (100) to the second treatment stage (102).

5. Aluminum reduction plant (1000) according to claim 4 in which each reactor (104) is configured to preheat the alumina that is to supply the group of electrolytic cells (2) to which this reactor (104) is associated, by heat transfer between the pot gases flowing in said reactor (104) and said alumina and each reactor (104) comprises a second outlet (112) to supply the group of electrolytic cells (2) with the alumina preheated within reactor (104) by the pot gases.

6. Aluminum reduction plant (1000) according to claim 5 in which each reactor (104) comprises an enclosure (114) defining a volume in which both the pot gases from the related group of electrolytic cells (2) and the alumina for supplying this group of electrolytic cells (2) flow, the enclosure (114) being configured to allow heat transfer by direct contact between the pot gases and the alumina for supplying the related group of electrolytic cells (2).

7. Aluminum reduction plant (1000) according to any of claims 4 to 6 in which each reactor (104) of the first treatment stage (100) is configured to separate the pot gases, the solid particles transported by the pot gases, and the fluorided alumina resulting from the adsorption of fluorine on the alumina injected into the reactor (104) via the second inlet (108).

8. Aluminum reduction plant (1000) according to any of claims 4 to 7, in which the aluminum reduction plant (1000) comprises a desorption device (136) configured to allow the desorption of sulfur dioxide fixed onto the alumina, the desorption device (136) comprising an inlet (138) connected to the second treatment stage (102) so as to collect the sulfurized alumina resulting from treatment of the sulfur dioxide in the second treatment stage (102) by adsorption of the sulfur dioxide on the alumina, and an outlet (140) connected to the second inlet (108) of the first treatment stage (100) reactors (104), so that the alumina feeding the reactors (104) of the first treatment stage (100) is the desulfurized alumina coming from the desorption device (136).

9. Aluminum reduction plant (1000) according to claim 8, in which the heat exchanger (142) comprises a heat transfer fluid circulation circuit configured to reduce the temperature of the pot gases leaving the reactors (104) of the first treatment stage (100) by heating the heat transfer fluid circulating in this heat transfer fluid circulation circuit, and the heat transfer fluid circulation circuit is configured to transfer heat from the heated heat transfer fluid to a desorption fluid to be injected into the desorption device (136).

10. Aluminum reduction plant (1000) according to any of claims 1 to 9, in which the gas treatment circuit includes a humidification device (148) upstream of the second treatment stage (102).

11. Treatment method for pot gases emitted by the electrolytic cells of a series of electrolytic cells in an aluminum reduction plant (1000), especially an aluminum reduction plant (1000) according to claims 1 to 10, the process comprising the steps of:
- treating hydrogen fluoride in the pot gases in the first treatment stage (100) by adsorption onto the alumina,
- treating sulfur dioxide in the pot gases in the second treatment stage (102) by adsorption onto the alumina.
the method being **characterized in that** it comprises a step of: cooling the pot gases with a heat exchanger (142) after treatment of the pot gases in the first treatment stage and before treatment of the pot gases in the second treatment stage.

12. Method according to claim 11, comprising the step involving treating the hydrogen fluoride in the pot gases in the first treatment stage (100) comprises treating the hydrogen fluoride in parallel in a plurality of reactors (104), each reactor (104) being associated with a group of electrolytic cells (2) from the series of electrolytic cells (2), each group of electrolytic cells (2) comprising one or more electrolytic cells (2) from the series of electrolytic cells (2).

13. Method according to claim 12, in which the method comprises the step of: preheating the alumina to feed the electrolytic cells (2) of each group of electrolytic cells (2) by heat transfer between said alumina and the pot gases collected by the reactor (104) associated with the corresponding group of electrolytic cells (2).

14. Method according to claim 13, in which said heat transfer is achieved by direct contact between said alumina and said pot gases.

15. Method according to any of claims 11 to 14, in which the method includes:
- fixing sulfur dioxide onto the alumina by adsorption in a reactor (120) of the second treatment stage (102), so as, firstly, to obtain pot gases that are free of sulfur dioxide and, secondly, sulfurized alumina,
- separating the sulfur dioxide present in the sulfided alumina by desorption in a desorption device (136), so as to obtain desulfurized alumina,
- injecting the alumina desulfurized in the reactors (104) of the first treatment stage (100) so as to adsorb the fluorine present in the pot gases and obtain fluorinated alumina,
- route the fluorinated alumina from the reactors (104) of the first treatment stage (100) to the electrolytic cells (2) in order to supply the electrolysis reaction with alumina.
